# EUROPEAN PATENT APPLICATION

(11) **EP 4 607 869 A1**
(43) Date of publication of application: **27.08.2025**
(21) Application number: 22963184.1
(22) Date of filing: 28.10.2022
(51) Int. Cl.: H04L 27/00

(54) **COMMUNICATION METHODS, AND DEVICES**

(71) Applicant: GUANGDONG OPPO MOBILE TELECOMMUNICATIONS CORP., LTD., Dongguan, Guangdong 523860 (CN)
(72) Inventor: LU, Fei, Dongguan, Guangdong 523860 (CN); YANG, Haorui, Dongguan, Guangdong 523860 (CN); XU, Yang, Dongguan, Guangdong 523860 (CN); GUO, Yali, Dongguan, Guangdong 523860 (CN)
(74) Representative: RGTH
(86) International application number: PCT/CN2022/128376
(87) International publication number: WO 2024/087203

(57) **Abstract**

The present application relates to a communication method, a device, a computer-readable storage medium, a computer program product and a computer program. The methods include: acquiring, by an access network device, data of each terminal device of one or more terminal devices, where the one or more terminal devices are associated with a target application function (AF); and transmitting, by the access network device through a first data transmission channel, the data of each terminal device of the one or more terminal devices, where the first data transmission channel is related to the target AF.

## Description

### TECHNICAL FIELD

The present application relates to the field of communications, and more particularly, to a communication method, a device, a computer-readable storage medium, a computer program product and a computer program.

### BACKGROUND

In the related art, a terminal device needs to be registered and then data may be transmitted. With the development of technologies, the mobile communication network needs to support requirements for a zero power consumption terminal to access the network. Therefore, how to improve system processing efficiency has become a problem that needs to be solved.

### SUMMARY

Embodiments of the present application provide a communication method, a device, a computer-readable storage medium, a computer program product and a computer program.

The embodiments of the present application provide a communication method, including:
acquiring, by an access network device, data of each terminal device of one or more terminal devices, where the one or more terminal devices are associated with a target application function (AF); and
transmitting, by the access network device through a first data transmission channel, the data of each terminal device of the one or more terminal devices, where the first data transmission channel is related to the target AF.

The embodiments of the present application provide a communication method, including:
receiving, by a first core network device through a first data transmission channel, data of each terminal device of one or more terminal devices; where the first data transmission channel is related to a target application function (AF), and the one or more terminal devices are associated with the target AF; and
transmitting, by the first core network device, the data of each terminal device of the one or more terminal devices.

The embodiments of the present application provide an access network device, including:
a first communication unit, configured to acquire data of each terminal device of one or more terminal devices, where the one or more terminal devices are associated with a target application function (AF); and transmit the data of each terminal device of the one or more terminal devices through a first data transmission channel, where the first data transmission channel is related to the target AF.

The embodiments of the present application provide a first core network device, including:
a second communication unit, configured to receive data of each terminal device of one or more terminal devices through a first data transmission channel, where the first data transmission channel is related to a target application function (AF), and the one or more terminal devices are associated with the target AF; and transmit the data of each terminal device of the one or more terminal devices.

The embodiments of the present application provide an access network device, including a processor and a memory. The memory is configured to store a computer program, and the processor is configured to call and run the computer program stored in the memory, to cause the access network device to perform the above method.

The embodiments of the present application provide a first core network device, including a processor and a memory. The memory is configured to store a computer program, and the processor is configured to call and run the computer programs stored in the memory, to cause the first core network device to perform the above method.

The embodiments of the present application provide a chip to implement the above methods.

Specifically, the chip includes: a processor, configured to call a computer program from a memory and run the computer program, to cause a device equipped with the chip to perform the above methods.

The embodiments of the present application provide a computer-readable storage medium, configured to store a computer program. The computer program, when performed on a device, causes the device to perform the above methods.

The embodiments of the present application provide a computer program product, including computer program instructions. The computer program instructions cause a computer to perform the above methods.

The embodiments of the present application provide a computer program, which, when performed on a computer, causes the computer to perform the above methods.

In the embodiments of the present application, by adopting the above solutions, the data of each terminal device of the one or more terminal devices is acquired at the granularity of the target AF, and then the data of each terminal device of the one or more terminal devices related to the target AF is transmitted through the first data transmission channel related to the target AF. In this way, data corresponding to one or more terminal devices related to each AF respectively may be transmitted through a channel at the granularity of each AF, which can reduce system complexity, reduce signaling interaction, and improve system processing efficiency, compared with processes such as registering each terminal device respectively and transmitting data through a channel at the granularity of a terminal device, etc.

### BRIEF DESCRIPTION OF THE DRAWINGS

FIG. 1 is a schematic diagram of an application scenario according to the embodiments of the present application.
FIG. 2 is a diagram of a 5G network system architecture according to the embodiments of the present application.
FIG. 3 is a schematic diagram of a zero power consumption system architecture.
FIG. 4 is a schematic flowchart of a communication method according to an embodiment of the present application.
FIG. 5 is a schematic flowchart of a communication method according to another embodiment of the present application.
FIG. 6 is an exemplary flowchart of a communication method according to yet another embodiment of the present application.
FIG. 7 is an exemplary flowchart of triggering, by an AMF, establishment of a first data transmission channel for a data transmission, according to the embodiments of the present application.
FIG. 8 is an exemplary flowchart of triggering, by an AIoT NF, establishment of a first data transmission channel for a data transmission, according to the embodiments of the present application.
FIG. 9 and FIG. 10 are two exemplary flowcharts of triggering, by a gNB, establishment of a first data transmission channel for a data transmission, according to the embodiments of the present application.
FIG. 11 is an exemplary flowchart of triggering, by an SMF, establishment of a first data transmission channel for a data transmission, according to the embodiments of the present application.
FIG. 12 is an exemplary flowchart of triggering, by a gNB, establishment of a first data transmission channel for a data transmission, according to an embodiment of the present application.
FIG. 13 is an exemplary flowchart of triggering, by a gNB, establishment of a first data transmission channel with a UPF for a data transmission, according to the embodiments of the present application.
FIG. 14 is an exemplary flowchart of triggering, by an SMF, establishment of a first data transmission channel between a gNB and a UPF for a data transmission, according to an embodiment of the present application.
FIG. 15 is a schematic diagram of a device registration procedure in the related art.
FIG. 16 is a schematic block diagram of an access network device according to an embodiment of the present application.
FIG. 17 is a schematic block diagram of an access network device according to another embodiment of the present application.
FIG. 18 is a schematic block diagram of a first core network device according to an embodiment of the present application.
FIG. 19 is a schematic block diagram of a communication device according to the embodiments of the present application.
FIG. 20 is a schematic block diagram of a chip according to the embodiments of the present application.
FIG. 21 is a schematic block diagram of a communication system according to the embodiments of the present application.

### DETAILED DESCRIPTION

Technical solutions in the embodiments of the present application will be described below with reference to the accompanying drawings in the embodiments of the present application.

The technical solutions in the embodiments of the present application may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication networks (Non-Terrestrial Networks, NTN) system, a universal mobile telecommunications system (UMTS), wireless local area networks (WLAN), wireless fidelity (WiFi), a 5th-generation (5G) communication system and other communication systems.

Generally speaking, traditional communication systems support a limited number of connections which is easy to be implemented. However, with the development of the communication technology, mobile communication systems will not only support traditional communications, but also support, for example, device to device (D2D) communication, machine to machine (M2M) communication, machine type communication (MTC), vehicle to vehicle (V2V) communication, or vehicle to everything (V2X) communication, etc. The embodiments of the present application may be applied to these communication systems as well.

In a possible implementation, the communication system in the embodiments of the present application may be applied to a carrier aggregation (CA) scenario, a dual connectivity (DC) scenario, and may also be applied to a standalone (SA) network deployment scenario.

In a possible implementation, the communication system in the embodiments of the present application may be applied to an unlicensed spectrum, where the unlicensed spectrum may also be considered as a shared spectrum. Alternatively, the communication system in the embodiments of the present application may be applied to a licensed spectrum, where the licensed spectrum may be considered as an unshared spectrum.

In the embodiments of the present application, each embodiment is described in conjunction with a network device and a terminal device, where the terminal device may be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STAION, ST) in the WLAN, or may be a cellular phone, a cordless phone, a session initiation protocol (SIP) phone, a wireless local loop (WLL) station, a personal digital processing (Personal Digital Assistant, PDA) device, a handheld device with a wireless communication function, a computing device or other processing devices connected to a wireless modem, an in-vehicle device, a wearable device, a terminal device in a next generation communication system (e.g., an NR network), a terminal device in a future evolved public land mobile network (PLMN) network, or the like.

In the embodiments of the present application, the terminal device may be deployed on land, including indoor or outdoor, handheld, wearable, or in-vehicle; the terminal device may also be deployed on water (e.g., on a steamship, etc.); the terminal device may also be deployed in air (e.g., on an airplane, on a balloon, or on a satellite, etc.).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, or a wireless terminal device in smart home, or the like.

As an example but not a limitation, in the embodiments of the present application, the terminal device may also be a wearable device. The wearable device may be referred to as a wearable smart device, which is a general term for wearable devices developed by performing the intellectualized design on daily wear by applying wearable technologies, such as glasses, gloves, watches, clothing and shoes, etc. The wearable device is a portable device that is worn directly on a body, or integrated into clothes or accessories of users. The wearable device not only is a hardware device, but also implements powerful functions by software support as well as data interaction or cloud interaction. Generalized wearable smart devices include devices, that are fully functional, large in size and may implement full or partial functions without relying on smart phones, such as smart watches or smart glasses; as well as devices, that only focus on a certain type of application function and need to be used in conjunction with other devices (e.g., a smart phone), such as various smart bracelets and smart jewelry that monitor physical signs, or the like.

In the embodiments of the present application, the network device may be a device used for communicating with a mobile device. The network device may be an access point (AP) in WLAN, a base station (Base Transceiver Station, BTS) in GSM or CDMA, or may also be a base station (NodeB, NB) in WCDMA, or may also be an evolutional base station (Evolutional Node B, eNB or eNodeB) in LTE, a relay station or an access point, or an in-vehicle device, a wearable device, a network device (gNB) in an NR network, a network device in a future evolved PLMN network, a network device in an NTN network, or the like.

As an example but not a limitation, in the embodiments of the present application, the network device may have mobile characteristics. For example, the network device may be a device which is mobile. Optionally, the network device may be a satellite, or a balloon station. For example, the satellite may be a low earth orbit (LEO) satellite, a medium earth orbit (MEO) satellite, a geostationary earth orbit (GEO) satellite, or a high elliptical orbit (HEO) satellite, etc. Optionally, the network device may also be a base station deployed on land, water, or other places.

In the embodiments of the present application, the network device may provide a service for a cell, and the terminal device communicates with the network device through a transmission resource (e.g., a frequency-domain resource, or in other words, a spectrum resource) used by the cell. The cell may be a cell corresponding to the network device (e.g., a base station), and the cell may belong to a macro base station, or may belong to a base station corresponding to a small cell. The small cell here may include: a metro cell, a micro cell, a pico cell, or a femto cell, or the like. These small cells have characteristics of small coverage ranges and low transmission power, which are applicable for providing a data transmission service with high speed.

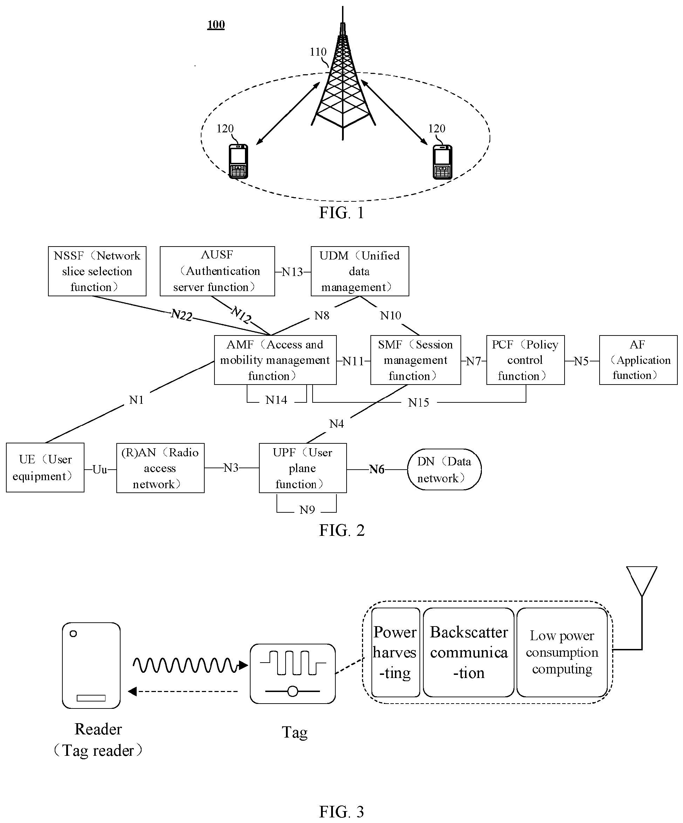

FIG. 1 exemplarily shows a communication system 100. The communication system includes a network device 110 and two terminal devices 120. In a possible implementation, the communication system 100 may include multiple network devices 110, and the coverage range of each network device 110 may include other number of terminal devices 120, which is not limited in the embodiments of the present application.

In a possible implementation, the communication system 100 may further include other network entities such as a mobility management entity (MME) and an access and mobility management function (AMF), which are not limited in the embodiments of the present application.

The network device may also include an access network device and a core network device. That is, the wireless communication system also includes multiple core networks for communicating with the access network device. The access network device may be an evolutional base station (evolutional node B, which may be abbreviated as eNB or e-NodeB), a macro base station, a micro base station (also called small base station), a pico base station, an access point (AP), a transmission point (TP) or a new generation base station (new generation Node B, gNodeB), etc, in a long-term evolution (LTE) system, a next-generation mobile communication (next radio, NR) system, or in an authorized auxiliary access long-term evolution (LAA-LTE) system.

It should be understood that, in the embodiments of the present application, a device with a communication function in the network/system may be referred to as a communication device. Taking the communication system shown in FIG. 1 as an example, the communication device may include a network device with a communication function and a terminal device with a communication function. The network device and the terminal device may be the specific devices in the embodiments of the present application, which will not be repeated here. The communication device may further include other devices in the communication system, such as a network controller, a mobility management entity, and other network entities, which are not limited in the embodiments of the present application.

To facilitate understanding of the embodiments of the present application, the basic procedures and basic concepts involved in the embodiments of the present application are briefly described below. It should be understood that the basic procedures and basic concepts introduced below do not limit the embodiments of the present application.

The 5G network system architecture is shown in FIG. 2, which includes: a network slice selection function (NSSF) which is mainly used to manage network slice related information, for example, responsible for selecting a network slice for a terminal device; an authentication server function (AUSF) which is used to complete an identity authentication function of user accesses; unified data management (UDM) which is used to manage and store subscription data and authentication data; an access and mobility management function (AMF) which is used to complete mobility management, security anchor point and security context management, or the like, and in addition to the mobility management of the UE, responsible for forwarding session management-related messages between the UE and the SMF; a session management function (SMF) which is used to complete session management, UE IP address allocation and management, or the like; a policy control function (PCF) which is responsible for developing policies related to mobility management, session management and charging for the UE; an application function (AF) which is used for external application program servers; a user plane function (UPF) which is used for complex user plane processing, such as forwarding traffics between the radio access network and the Internet, reporting traffic usage, implementing the policy of quality of service (QoS), or the like; or a data network (DN), i.e., a data network external to 5GC (e.g., the Internet, etc.).

In addition, data is transmitted through corresponding interfaces between various nodes of the 5GC (5G core network), between the user equipment (UE) and nodes of the 5GC, between the UE and the radio access network (RAN), and between the RAN and nodes of the 5GC, respectively. For example, as shown in FIG. 2: in the 5GC, data is transmitted via an interface N22 between the AMF and the NSSF; data is transmitted via an interface N11 between the AMF and the SMF; data is transmitted via N12 between the AMF and the AUSF; data is transmitted via an interface N8 between the AMF and the UDM. Data is transmitted via an interface N4 between the SMF and the UPF. Data is transmitted via an interface N6 between the UPF and the external data network, and via an interface N3 between the UPF and the AN. The UE establishes an access layer connection, exchanges access layer messages and transmits wireless data with the AN via an interface Uu; the UE establishes a non-access stratum (NAS) connection and exchanges NAS messages with the AMF via an interface N1. Data is transmitted via an interface N2 between the RAN and the AMF, and data is transmitted via an interface N3 between the RAN and the UPF. It should be understood that, only interfaces between a part of nodes are described above, and other interfaces between other nodes of the 5GC in FIG. 2 will not be repeated here.

A zero power consumption communication network is a wireless communication technology applicable for short distances and low rates. A zero power communication device mainly combines a radio frequency power harvesting technology, a backscatter technology, and a low power consumption computing technology to achieve the advantage of the device node not carrying a power supply. A basic architecture of the zero power consumption system is shown in FIG. 3, which includes a reader (tag reader) and a tag. The tag may have functions such as power harvesting, backscatter communication, and low power consumption computing, etc. The power harvesting may also be called radio frequency power harvesting, the core of the radio frequency power harvesting is to convert the radio frequency power into the direct current. The power may be stored in a battery or capacitor, or may be directly used to drive a logic circuit, a digital chip or a sensor device, etc., after being harvested, to complete the modulation and transmission of backscatter signals, the collection and processing of sensing information, and other functions and applications. The tag is a type of zero power consumption terminal. It should be understood that in actual scenarios, the zero power consumption terminal may be a tag or a common device, which is not limited here.

With the development of the 5G system, a requirement that the 5G system supports the zero power consumption terminal access to the network, appears in the 3GPP standard. Scenarios mainly targeted have characteristics of: an extreme environment, which is not suitable for common terminals to work; the use of terminals with very low power consumption and cost; battery-free terminals. The zero power consumption communication system may be used in scenarios such as a wireless industrial inductive network, smart agriculture, smart warehousing and logistics, smart home or the like.

Based on power sources and usage manners of zero power consumption terminals, the zero power consumption terminals may be divided into the following types.
1) Passive zero power consumption terminal. The passive zero power consumption terminal does not need a built-in battery. When the passive zero power consumption terminal approaches the network device (e.g., a reader/writer of a radio frequency identification (RFID) system), the passive zero power consumption terminal is within a range of a near-field formed by antenna radiation of the network device. Therefore, antenna(s) of the passive zero power consumption terminal generates an induced current through electromagnetic induction, and the induced current drives a low power consumption chip circuit of the zero power consumption terminal, so as to implement demodulation of a signal on a forward link, modulation of a signal on a backward link, and other works. For a backscatter link, the passive zero power consumption terminal transmits a signal by an implementation of the backscatter.
   It can be seen that the passive zero power consumption terminal does not need a built-in battery to be driven either for the forward link or for the backward link, which is a true zero power consumption terminal. The passive zero power consumption terminal does not need a battery, and its radio frequency circuit and baseband circuit are very simple, and for example, a low-noise amplifier (LNA), a power amplifier (PA), a crystal oscillator, a digital-to-analog converter (ADC) and other devices are not needed. Therefore, the passive zero power consumption terminal has many advantages of a small size, light weight, very low price, long service life, etc. The passive zero power consumption terminal may further be characterized by: 1) no battery; 2) obtaining power from the surrounding environment (e.g., radio waves, solar power, wind power, mechanical kinetic power, etc.); 3) no universal subscriber identity module (USIM). It may also store a certain amount of power by the surrounding environment, but the power is a little, so the supported functional logics of the passive zero power consumption terminal are much less than that of the ordinary mobile phone terminal.
2) Semi-passive zero power consumption terminal. The semi-passive zero power consumption terminal itself does not install a conventional battery therein, but may harvest radio wave power by using an RF power harvesting module and meanwhile, store the harvested power in a power storage unit (e.g., a capacitor). After obtaining the power, the power storage unit may drive a low power consumption chip circuit of the semi-passive zero power consumption terminal, to implement demodulation of a signal on a forward link, modulation of a signal on a backward link and other works. For a backscatter link, the semi-passive zero power consumption terminal transmits a signal by an implementation of the backscatter.
   It can be seen that the semi-passive zero power consumption terminal does not meed a built-in battery to be driven either for the forward link or for the backward link. Although the power stored in the capacitor is used when working, the power comes from the radio power harvested by the power harvesting module. Therefore, the semi-passive zero power consumption terminal is also a true zero power consumption terminal. The semi-passive zero power consumption terminal inherits many advantages of the passive zero power consumption terminal, and thus has many advantages of a small size, light weight, very low price and long service life, etc.
3) Active zero power consumption terminal. The zero power consumption terminal used in some scenarios may also be an active zero power consumption terminal, and this type of terminal may have a built-in battery. The battery is used to drive a low power consumption chip circuit of the active zero power consumption terminal, to implement demodulation of a signal on a forward link, modulation of a signal on a backward link and other works. However, for a backscatter link, the active zero power consumption terminal transmits a signal by an implementation of the backscatter. Therefore, the zero power consumption of this type of terminal is mainly reflected in the fact that the signal transmission on the backward link does not require the power of the terminal itself, but uses the manner of the backscatter. The built-in battery of the active zero power consumption terminal power an RFID chip, to increase a reading/writing distance of the tag and improve reliability of communication. Therefore, it may be applied in some scenarios with relatively high requirements on communication distance, reading latency, or the like.

It should be understood that the terms "system" and "network" are often used interchangeably herein. The term "and/or" herein is only an association relationship to describe associated objects, indicating that there may be three kinds of relationships, and for example, "A and/or B" may represent three cases where: A exists alone, both A and B exist, and B exist alone. In addition, a character "/" herein generally indicates that the associated objects before and after this character are in an "or" relationship.

It should be understood that, "indicate / indicated / indicating / indication" mentioned in the embodiments of the present application may mean a direct indication, an indirect indication, or may mean that there is an association relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B.

In the description of the embodiments of the present application, the term "correspond / corresponding / correspondence" may mean that there is a direct correspondence or an indirect correspondence between the two, or may mean that there is an association relationship between the two, or may mean a relationship of indicating and being indicated, or a relationship of configuring and being configured, or the like.

To facilitate understanding of the technical solutions of the embodiments of the present application, the relevant technologies of the embodiments of the present application are described below. The following relevant technologies, as optional solutions, may be arbitrarily combined with the technical solutions of the embodiments of the present application, and those combined solutions all belong to the protection scope of the embodiments of the present application.

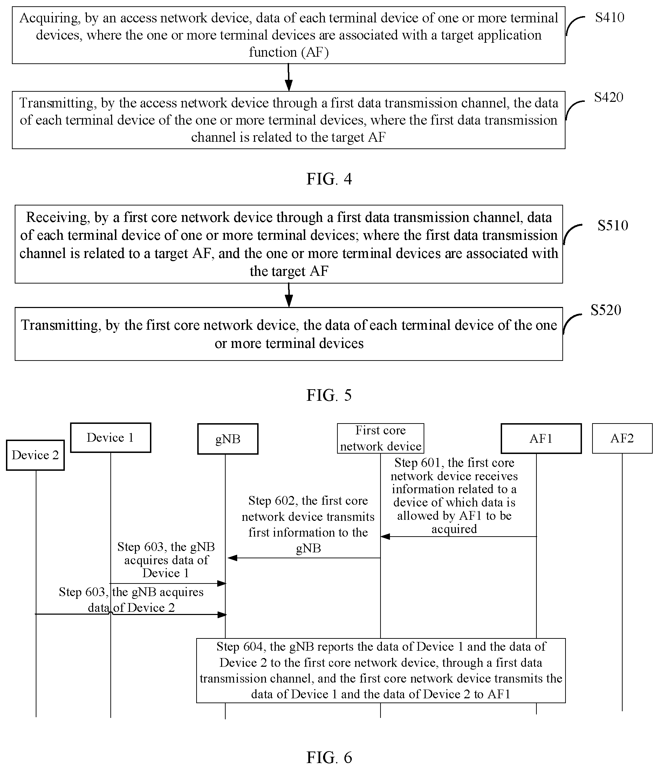

FIG. 4 is a schematic flowchart of a communication method according to an embodiment of the present application. The method includes at least a part of the following contents:
S410, acquiring, by an access network device, data of each terminal device of one or more terminal devices, where the one or more terminal devices are associated with a target application function (AF); and
S420, transmitting, by the access network device through a first data transmission channel, the data of each terminal device of the one or more terminal devices, where the first data transmission channel is related to the target AF.

FIG. 5 is a schematic flowchart of a communication method according to another embodiment of the present application. The method includes at least a part of the following contents:
S510, receiving, by a first core network device through a first data transmission channel, data of each terminal device of one or more terminal devices; where the first data transmission channel is related to a target AF, and the one or more terminal devices are associated with the target AF; and
S520, transmitting, by the first core network device, the data of each terminal device of the one or more terminal devices.

Here, the access network device may be any one of a base station, a gNB, an eNB, and the like.

The first core network device may be a device in the 5GC. The first core network device is a core network device that establishes the first data transmission channel with the access network device. More specifically, the first core network device may be one of: an AMF, a core network device related to the target AF, a UPF, and an SMF. The core network device related to the target AF may refer to a core network device dedicated to serving the target AF in the 5GC. Exemplarily, the core network device related to the target AF may be called an Internet of Things (IoT) network function (NF), or an ambient power enabled Internet of Things (AIoT) NF. Certainly, the core network device related to the target AF may also be called other names, which will not be exhausted here.

The target AF may be one of one or more AFs. Any one of the one or more AFs may be an external application program server.

In a preferred example, the terminal device is a zero power consumption terminal. That is, any one of the aforementioned one or more terminal devices may be a zero power consumption terminal. It should be understood that the terminal device may also be other types of devices, which are not exhausted here.

The aforementioned one or more terminal devices being associated with the target AF may mean that each terminal device of the aforementioned one or more terminal devices is a device of which data is allowed by the target AF to be acquired. Here, the device of which data is allowed by the target AF to be acquired may refer to a device of which data is allowed by the target AF to be read or collected by the access network device.

In some possible implementations, before performing the aforementioned S410, the access network device may first determine which terminal devices are the device of which data is allowed by the target AF to be acquired.

The processing of the access network device may include: receiving, by the access network device, first information, where the first information carries information related to a device of which data is allowed by the target AF to be acquired; and determining, by the access network device, based on the first information, the one or more terminal devices, where each terminal device of the one or more terminal devices is the device of which data is allowed by the target AF to be acquired.

Optionally, the first information may be transmitted by the first core network device.

The aforementioned processing performed by the first core network device may further include: receiving, by the first core network device, information related to a device of which data is allowed by the target AF to be acquired; and transmitting, by the first core network device, first information, where the first information carries the information related to the device of which data is allowed by the target AF to be acquired.

Herein, receiving, by the first core network device, the information related to the device of which data is allowed by the target AF to be acquired, includes one of: receiving, by the first core network device, the information related to the device of which data is allowed by the target AF to be acquired, which is transmitted by the target AF; or receiving, by the first core network device, the information related to the device of which data is allowed by the target AF to be acquired, which is transmitted by a second core network device.

In a scenario, the first core network device may be directly connected to the target AF and directly connected to the access network device. The first core network device may receive the information related to a device of which data is allowed by the target AF to be acquired, which is transmitted by the target AF.

In a preferred example, the first core network device in this scenario may be any one of: an AMF and a core network device related to the target AF. It should be pointed out that in other possible examples, the first core network device in this scenario may also be any one of an SMF and a UPF, and all possible types of the first core network device are not exhausted here.

In another scenario, the first core network device may be directly connected to the access network device, and connected to the target AF through a second core network device. The second core network device receives the information related to the device of which data is allowed by the target AF to be acquired, which is transmitted by the target AF, and then the second core network device transmits the information related to the device of which data is allowed by the target AF to be acquired, to the first core network device. Correspondingly, the first core network device receives the information related to the device of which data is allowed by the target AF to be acquired, which is transmitted by the second core network device.

In a preferred example, the aforementioned first core network device in this scenario may be any one of: an AMF and a core network device related to the target AF. The aforementioned second core network device may be an SMF or a network element function (NEF). In this scenario, if the second core network device is the SMF, a service provider to which the aforementioned target AF belongs may be a trusted service provider or operator, and the aforementioned first core network device is the AMF. If the second core network device is the NEF, the service provider to which the aforementioned target AF belongs may be an untrusted third-party service provider, it is necessary to isolate the core network device from the target AF based on the NEF, and the aforementioned first core network device may be the AMF or the core network device related to the target AF.

It should be pointed out that in other possible examples, the first core network device in this scenario may also be any one of an AMF, a core network device related to the target AF, an SMF, and a UPF; the second core network device in this scenario may be an NEF. As long as the first core network device is different from the second core network device, it is within the protection scope of the embodiments, and all possibilities are not exhausted here.

Transmitting the first information by the first core network device means: transmitting, by the first core network device, the first information to the access network device. Correspondingly, receiving, by the access network device, the first information, includes: receiving, by the access network device, the first information from the first core network device.

Herein, the information related to the device of which data is allowed by the target AF to be acquired includes at least one of: identity-related information of the device of which data is allowed by the target AF to be acquired; or parameter information of the device of which data is allowed by the target AF to be acquired.

The identity-related information of the device of which data is allowed by the target AF to be acquired may refer to partial information in an identity of the device of which data is allowed by the target AF to be acquired. Specifically, an identity of any device of which data is allowed by the target AF to be acquired may include multiple numbers and/or multiple characters, and the identity-related information of the device of which data is allowed by the target AF to be acquired may be: same numbers and/or same characters in a same location, in identities of multiple devices of which data is allowed by the target AF to be acquired. For example, assuming that an identity of a device A of which data is allowed by the target AF to be acquired contains 32 numbers, and first 4 numbers of identities of all devices of which data is allowed by the target AF to be acquired are the same, then the identity-related information of the device of which data is allowed by the target AF to be acquired may only include the first 4 numbers of the identities. It should be understood that this is only an exemplary description here, and in actual processing, the identity-related information of the device of which data is allowed by the target AF to be acquired may not be limited to the first few numbers and/or characters of the identities, but may also be last few numbers and/or characters of the identities, or the like, and all possible cases are not exhausted here.

The parameter information of the device of which data is allowed by the target AF to be acquired, includes at least one of: a signal frequency of the device of which data is allowed by the target AF to be acquired; a signal waveform of the device of which data is allowed by the target AF to be acquired; a data acquiring time of the device of which data is allowed by the target AF to be acquired; or a location of the device of which data is allowed by the target AF to be acquired.

Herein, the signal frequency of the device of which data is allowed by the target AF to be acquired may include at least one of: one or more signal transmitting frequency points of the device of which data is allowed by the target AF to be acquired, or one or more signal transmitting frequency bands of the device of which data is allowed by the target AF to be acquired.

The signal waveform of the device of which data is allowed by the target AF to be acquired may be configured according to actual conditions. The signal waveform may be at least one of: a triangular wave, a rectangular wave, a sine wave, a sawtooth wave, or a pulse wave.

The data acquiring time of the device of which data is allowed by the target AF to be acquired may be preset according to actual requirements. For example, the data acquiring time of the device of which data is allowed by the target AF to be acquired may include one or more periods of time, and the one or more periods of time may include at least one of: 10-12 in the morning, 6-8 in the afternoon, or 10-12 at night, etc, which is only an exemplary description and is not a limitation on the aforementioned data acquiring time.

The location of the device of which data is allowed by the target AF to be acquired may include: a geographical location or a cell location in which the device of which data is allowed by the target AF to be acquired is located. Herein, the geographical location may be represented by longitude and latitude, and the cell location may be represented by a cell identity.

Determining, by the access network device, the one or more terminal devices based on the first information may mean that: the access network device transmits a carrier signal and receives information related to each candidate terminal device of one or more candidate terminal devices; and determines one or more terminal devices that match the information related to the device of which data is allowed by the target AF to be acquired, in the first information, based on the information related to each candidate terminal device.

Herein, the information related to each candidate terminal device may include at least one of: an identity of each candidate terminal device, or a parameter of each candidate terminal device. The parameter of each candidate terminal device may include at least one of: a signal frequency of each candidate terminal device, a signal waveform of each candidate terminal device, a data acquiring time of each candidate terminal device, or a location of each candidate terminal device. That is to say, the access network device determines one or more terminal devices of which data is allowed by the target AF to be acquired, located within a coverage range of the access network device, based on the first information.

Optionally, the first information may be transmitted by other core network devices except the first core network device.

In this scenario, the first core network device may be the UPF, and other core network devices may refer to the AMF. The processing performed by the AMF may include: receiving, by the AMF, the information related to the device of which data is allowed by the target AF to be acquired; and transmitting, by the AMF, the first information to the access network device, where the first information carries the information related to the device of which data is allowed by the target AF to be acquired.

Herein, receiving, by the AMF, the information related to the device of which data is allowed by the target AF to be acquired, includes one of: receiving, by the AMF, the information related to the device of which data is allowed by the target AF to be acquired, which is transmitted by the target AF; or receiving, by the AMF, the information related to the device of which data is allowed by the target AF to be acquired, which is transmitted by a third core network device. Here, the third core network device has been described in the aforementioned embodiments, which will not be repeated here.

In this scenario, the access network device may receive the first information from the aforementioned other core network devices. The manner of determining, by the access network device, the one or more terminal devices of which data is allowed by the target AF to be acquired, based on the first information, is the same as the aforementioned embodiments and will not be described repeatedly.

Based on the aforementioned processing, the access network device may determine one or more terminal devices of which data is allowed by the target AF to be acquired, in the coverage range of the access network device.

In some possible implementations, performing S410 by the access network device may be: collecting (or reading), by the access network device, the data of each terminal device of the one or more terminal devices.

Exemplarily, collecting (or reading), by the access network device, the data of each terminal device of the one or more terminal devices, may include that: the access network device may transmit a radio frequency signal; the aforementioned each terminal device transmits a reflected signal to the access network device in response to the radio frequency signal; and the access network device acquires the data of each terminal device from the reflected signal of each terminal device.

Herein, the access network device may transmit the radio frequency signal periodically, or may transmit the radio frequency signal based on a preset time, or may transmit the radio frequency signal in response to a trigger signal. The aforementioned radio frequency signal may also be referred to as a carrier signal. The aforementioned trigger signal may be initiated by a manager using a device he/her manages, or may be initiated in other manners, which are not exhausted here. It should be understood that this example is particularly applicable for a scenario where the terminal device is a zero power consumption terminal.

Exemplarily, collecting (or reading), by the access network device, the data of each terminal device of the one or more terminal devices, may include: receiving, by the access network device, data reported by each terminal device. In this example, the terminal device may report data periodically, or may report data based on a preset time. It should be understood that this example is particularly applicable for a scenario where the terminal device is other types of terminal other than the zero power consumption terminal.

In the aforementioned two examples, the periodic cycle length may be set according to actual conditions, for example, it may be 10 minutes, 1 minute, or longer or shorter. The preset time may be configured according to actual conditions, for example, it may be the same as the data acquiring time of the device of which data is allowed by the target AF to be acquired, as described above; or, it may be a part of time points in the data acquiring time of the device of which data is allowed by the target AF to be acquired, and for example, the data acquiring time of the device of which data is allowed by the target AF to be acquired is 10 o'clock to 12 o'clock in the morning every day, then the preset time may be 10 o'clock, 11 o'clock or 12 o'clock, or may be other times, which are not exhausted here.

In some other possible implementations, performing S410 by the access network device aforementioned may be: collecting (or reading), by the access network device, data of each candidate terminal device of one or more candidate terminal devices within the coverage range of the access network device; and acquiring the data of each terminal device of the one or more terminal devices, from the data of each candidate terminal device of all the candidate terminal devices.

In this implementation, the one or more candidate terminal devices may include: one or more other terminal devices of which data is allowed by each of one or more other AFs to be acquired; and the aforementioned one or more terminal devices. Herein, the other AFs refer to AFs other than the target AF. That is, the access network device not only reads or collects the data of each terminal device of the one or more terminal devices of which data is allowed by the target AF to be acquired, but also reads or collects data of each of the one or more other terminal devices of which data is allowed by other AFs to be acquired; however, the access network device only extracts the data of each terminal device of the one or more terminal devices aforementioned from them. The manner of acquiring the data of each candidate terminal device is similar to the aforementioned implementations, which will not be repeated here.

In conjunction with FIG. 6, taking the access network device as a gNB, the one or more terminal devices as two devices specifically, i.e., Device 1 and Device 2 respectively, and the target AF as AF1 as an example, an exemplary description of the solution provided above is given, and specifically includes the following contents.

Step 601, the first core network device receives information related to a device of which data is allowed by AF1 to be acquired.

Herein, the first core network device may be an AMF, or a core network device related to the target AF.

AF1 configures the gNB through the first core network device, to authorize the gNB to collect a parameter of a device related to AF1. Herein, a service provider to which AF1 belongs may be an operator, or a third-party service provider.

The information related to the device of which data is allowed by AF1 to be acquired may include the same contents as the above embodiments, and for example, it may include identity-related information of the device of which data is allowed by AF1 to be acquired, and parameter information of the device of which data is allowed by AF1 to be acquired. The parameter information of the device may be used as auxiliary information, and for example, may include at least one of a signal frequency, a signal waveform, a data acquiring time, or a location of the device of which data is allowed by AF1 to be acquired, etc.

If the first core network device is the AMF, or the core network device related to the target AF, and the first core network device is directly connected to AF1, the first core network device may directly receive the information related to the device of which data is allowed by AF1 to be acquired, which is transmitted by AF1. If the first core network device is the AMF and the first core network device is connected to AF1 through an SMF or an NEF, the first core network device receives the information related to the device of which data is allowed by AF1 to be acquired, which is forwarded by the SMF or the NEF.

Step 602, the first core network device transmits first information to the gNB, where the first information carries the information related to the device of which data is allowed by AF1 to be acquired.

Step 603, the gNB acquires data of Device 1, and the gNB acquires data of Device 2.

Before performing the step 603, it may further include: determining, by the the gNB based on the first information, Device 1 and Device 2 of which data is allowed by AF1 to be acquired, located within the coverage range of the gNB. The specific processing manner is the same as the above embodiments.

In the step 603, the gNB may only collect or read the data of Device 1 and the data of Device 2 of which data is allowed by AF1 to be acquired.

Alternatively, in the step 603, the gNB may collect or read data of candidate Devices of which data is allowed by each AF of all AFs to be acquired, and then extract and acquire the data of Device 1 and the data of Device 2 from the data of all candidate Devices. Herein, the All AF may include AF1 and AF2, which are shown in FIG. 6.

Step 604, the gNB reports the data of Device 1 and the data of Device 2 to the first core network device, through a first data transmission channel, and the first core network device transmits the data of Device 1 and the data of Device 2 to AF1.

Based on the above embodiments, the establishment of the first data transmission channel, performing the aforementioned S410 and S420 by the access network device, and performing the aforementioned S510 and S520 by the first core network device are described in detail below.

In some possible implementations, the first core network device may trigger the establishment of the first data transmission channel between the access network device and the first core network device.

The processing performed by the first core network may further include: transmitting, by the first core network device, a first request message, where the first request message is used to request to establish the first data transmission channel; and receiving, by the first core network device, a first response message, where the first response message is used to indicate that establishment of the first data transmission channel has been completed.

Correspondingly, the processing performed by the access network device may further include: receiving, by the access network device, a first request message, where the first request message is used to request to establish the first data transmission channel; and transmitting, by the access network device, a first response message, where the first response message is used to indicate that establishment of the first data transmission channel has been completed.

Specifically, transmitting, by the first core network device, the first request message, may include: transmitting, by the first core network device, the first request message to the access network device; and receiving, by the first core network device, the first response message, may include: receiving, by the first core network device, the first response message transmitted by the access network device. Correspondingly, receiving, by the access network device, the first request message, may include: receiving, by the access network device, the first request message transmitted by the first core network; and transmitting, by the access network device, the first response message, may include: transmitting, by the access network device, the first response message to the first core network device.

Herein, the first request message carries information related to the target AF and a parameter related to the first data transmission channel.

The information related to the target AF includes at least one of: an identity of the target AF, or an identity of a service provider to which the target AF belongs. The identity of the target AF may specifically refer to an ID (Identity, identity identification number) of the target AF. The identity of a service provider to which the target AF belongs may specifically refer to an ID of the service provider to which the target AF belongs.

The parameter related to the first data transmission channel includes at least one of: a first Internet Protocol (IP) address related to the target AF, an N2-application layer protocol (AP) identity related to the target AF, or a tunnel TE identity related to the target AF.

Herein, the first IP address related to the target AF may specifically be an IP address related to the target AF, allocated by the first core network device. The N2-AP identity related to the target AF may be: an N2-AP identity related to the target AF, allocated by the first core network device. The tunnel TE identity related to the target AF refers to a TE identity related to the target AF, allocated by the first core network device.

In the aforementioned implementations, the first core network device is one of: an AMF, a core network device related to the target AF, a UPF, and an SMF.

In a preferred example, the first core network device is any one of the AMF or the core network devices related to the target AF, in this implementation. In this preferred example, the aforementioned parameter related to the first data transmission channel includes at least one of: the first IP address related to the target AF, or the N2-AP identity related to the target AF.

A transmitting occasion of the first request message may be when the first core network device transmits the aforementioned first information, or after the first core network device transmits the aforementioned first information and before the access network transmits the data of each terminal device.

If the transmitting occasion of the first request message is when the first information is transmitted, the first request message may be carried by the first information, or the first request message may be carried by third information; where the third information is different from the first information. If the transmitting occasion of the first request message is after the first core network device transmits the aforementioned first information and before the access network transmits the data of each terminal device, the first request message may be carried by the third information.

After completing the above processing, the access network device may perform S410. Performing by the access network device, S410 acquiring, by the access network device, the data of each terminal device of one or more terminal devices, may be: acquiring, by the access network device, data of any one terminal device of the one or more terminal devices in real time.

Transmitting, by the access network device through the first data transmission channel, the data of each terminal device of the one or more terminal devices in S420, includes: in a case where the access network device reaches a transmitting period, transmitting, by the access network device through the first data transmission channel, the data of each terminal device of the one or more terminal devices. Alternatively, in a case where the access network device has acquired data of all terminal devices of the one or more terminal devices, the access network device may transmit the data of each terminal device of the one or more terminal devices through the first data transmission channel. The transmitting period may be set according to actual conditions, and for example, it may be 10 minutes, 1 minute, 5 minutes, 1 hour, or longer or shorter, which is not exhausted here.

More specifically, transmitting, by the access network device through the first data transmission channel, the data of each terminal device of the one or more terminal devices, may include: transmitting, by the access network device through the first data transmission channel, second information to the first core network device, where the second information carries the data of each terminal device of the one or more terminal devices. Herein, the second information further carries the parameter related to the first data transmission channel.

Correspondingly, in S510, receiving, by the first core network device through the first data transmission channel, the data of each terminal device of the one or more terminal devices, may include: receiving, by the first core network device through the first data transmission channel, the second information transmitted by the access network device. Furthermore, in S520, transmitting, by the first core network device, the data of each terminal device of the one or more terminal devices, may include: transmitting, by the first core network device, the data of each terminal device of the one or more terminal devices to the target AF.

Here, the processing of transmitting, by the first core network device, the data of each terminal device of the one or more terminal devices directly to the target AF, may further include: if the service provider to which the target AF belongs is an operator or a trusted third-party service provider, the first core network device may directly transmit the data of each terminal device of the one or more terminal devices directly to the target AF.

Specifically, transmitting, by the first core network device, the data of each terminal device of the one or more terminal devices to the target AF, may include: parsing, by the first core network device, the aforementioned second information, to acquire the parameter related to the first data transmission channel and the data of each terminal device, carried by the second information; determining, by the first core network device, the target AF, based on the parameter related to the first data transmission channel; and transmitting, by the first core network device, the data of each terminal device of the one or more terminal devices to the target AF. That is, the first core network device may know that the data carried by the second information is related to the target AF, based on the parameter related to the first data transmission channel in the second information. Therefore, after determining the target AF, the first core network device may directly transmit the data of each terminal device to the target AF.

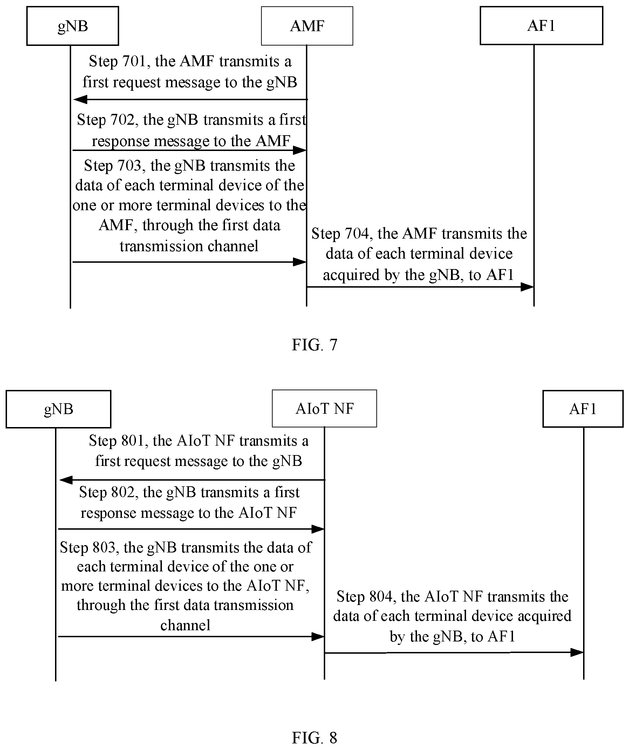

In conjunction with FIG. 7, the above implementations are exemplarily described. Taking the first core network device as an AMF, the access network device as a gNB, and the target AF as AF1 as an example, the specific description is as follows.

Step 701, the AMF transmits a first request message to the gNB, where the first request message is used to request to establish the first data transmission channel.

Before performing step 701, the AMF has received the information related to the device of which data is allowed by AF1 to be acquired. Step 701 may be performed when the AMF transmits the first information to the gNB, or may be performed after the AMF transmits the first information to the gNB.

More specifically, a transmitting occasion of the first request message may be after the AMF transmits the first information to the gNB, or when the AMF transmits the first information to the gNB. If the transmitting occasion of the first request message is when the AMF transmits the first information to the gNB, the first request message may be carried in the first information; or the first request message carried by the third information may be transmitted at the same time when the first information is transmitted. If the transmitting occasion of the first request message is after the AMF transmits the first information to the gNB, the first request message may be carried by the third information.

Herein, the first request message carries information related to AF1 and the parameter related to the first data transmission channel. Specifically, the information related to AF1 may be an ID of AF1. The parameter related to the first data transmission channel may include at least one of: a first IP address related to AF1, allocated by the AMF, or an N2-AP identity related to AF1, allocated by the AMF.

Step 702, the gNB transmits a first response message to the AMF, where the first response message is used to indicate that establishment of the first data transmission channel has been completed.

Step 703, the gNB transmits the data of each terminal device of the one or more terminal devices to the AMF, through the first data transmission channel.

It should be pointed out that although not illustrated in FIG. 7, before performing the step 703, the gNB needs to first determine one or more terminal devices of which data is allowed by AF1 to be acquired, based on the first information, and the gNB acquires the data of each terminal device of the one or more terminal devices, and then performs the step 703.

Step 704, the AMF transmits the data of each terminal device acquired by the gNB, to AF1.

Here, in the step 703, transmitting, by the gNB through the first data transmission channel, the data of each terminal device of the one or more terminal devices to the AMF, may be: transmitting, by the gNB through the first data transmission channel, the second information to the AMF, where the second information carries the data of each terminal device of the one or more terminal devices, and the second information carries the parameter related to the first data transmission channel. The second information may be uplink information.

Correspondingly, in the step 704, transmitting, by the AMF, the data of each terminal device acquired by the gNB to AF1, may include: parsing, by the AMF, the aforementioned second information, to acquire the parameter related to the first data transmission channel and the data of each terminal device, carried in the second information; determining, by the AMF, that the target AF is AF1, based on the parameter related to the first data transmission channel; and transmitting, by the AMF, the data of each terminal device of the one or more terminal devices directly to the AF1.

In conjunction with FIG. 8, the above implementations are exemplarily described. Taking the first core network device as an AIoT NF, the access network device as a gNB, and the target AF as AF1 as an example, the specific description is as follows.

Step 801, the AIoT NF transmits a first request message to the gNB, where the first request message is used to request to establish the first data transmission channel.

Before performing the step 801, the AIoT NF has received the information related to the device of which data is allowed by AF1 to be acquired. The step 801 may be performed when the AIoT NF transmits the first information to the gNB, or may be performed after the AIoT NF transmits the first information to the gNB.

More specifically, a transmitting occasion of the first request message may be after the AIoT NF transmits the first information to the gNB, or when the AIoT NF transmits the first information to the gNB. If the transmitting occasion of the first request message is when the AIoT NF transmits the first information to the gNB, the first request message may be carried in the first information; or the first request message carried by the third information may be transmitted at the same time when the first information is transmitted. If the transmitting occasion of the first request message is after the AIoT NF transmits the first information to the gNB, the first request message may be carried by the third information.

Herein, the first request message carries information related to AF1 and the parameter related to the first data transmission channel. Specifically, the information related to AF1 may be the ID of AF1. The parameter related to the first data transmission channel may include at least one of: a first IP address related to AF1, allocated by the AIoT NF, or an N2-AP identity related to AF1, allocated by the AIoT NF.

Step 802, the gNB transmits a first response message to the AIoT NF, where the first response message is used to indicate that establishment of the first data transmission channel has been completed.

Step 803, the gNB transmits the data of each terminal device of the one or more terminal devices to the AIoT NF through the first data transmission channel.

It should be pointed out that although not illustrated in FIG. 8, before performing the step 803, the gNB needs to first determine one or more terminal devices of which data is allowed by AF1 to be acquired, based on the first information, and the gNB acquires the data of each terminal device of the one or more terminal devices, and then performs the step 803.

Step 804, the AIoT NF transmits the data of each terminal device acquired by the gNB, to AF1.

Here, in the step 803, transmitting, by the gNB through the first data transmission channel, the data of each terminal device of the one or more terminal devices to the AIoT NF, may be: transmitting, by the gNB through the first data transmission channel, the second information to the AIoT NF, where the second information carries the data of each terminal device of the one or more terminal devices, and the second information carries the parameter related to the first data transmission channel. The second information may be uplink information.

Correspondingly, in the step 804, transmitting, by the AIoT NF, the data of each terminal device acquired by the gNB to AF1, may include: parsing, by the AIoT NF, the second information, to acquire the parameter related to the first data transmission channel and the data of each terminal device, carried in the second information; determining, by the AIoT NF, that the target AF is AF1, based on the parameter related to the first data transmission channel; and transmitting, by the AIoT NF, the data of each terminal device of the one or more terminal devices directly to the AF1.

In some possible implementations, the access network device may trigger the establishment of the first data transmission channel between the access network device and the first core network device.

The processing performed by the access network device may further include: transmitting, by the access network device, a second request message, where the second request message is used to request to establish the first data transmission channel; and receiving, by the access network device, a second response message, where the second response message carries a parameter related to the first data transmission channel.

Correspondingly, the processing performed by the first core network device may further include: receiving, by the first core network device, the second request message, where the second request message is used to request to establish the first data transmission channel; and transmitting, by the first core network device, the second response message, where the second response message carries the parameter related to the first data transmission channel.

Specifically, transmitting, by the access network device, the second request message, may include: transmitting, by the access network device, the second request message to the first core network; and receiving, by the access network device, the second response message, may include: receiving, by the access network device, the second response message transmitted by the first core network device. Correspondingly, receiving, by the first core network device, the second request message, includes: receiving, by the first core network device, the second request message transmitted by the access network device; and transmitting, by the first core network device, the second response message, includes: transmitting, by the first core network device, the second response message to the access network device.

Herein, the second request message carries information related to the target AF. A transmitting occasion of the second request message may be after the access network device receives the aforementioned first information and before the access network device transmits the data of each terminal device.

Specific descriptions of the first core network device, the information related to the target AF, and the parameter related to the first data transmission channel are the same as the description in the aforementioned implementations in which the first core network device triggers the establishment of the first data transmission channel between the access network device and the first core network device, and therefore it will not be described repeatedly.

After receiving the second response message aforementioned, the access network device may determine that the establishment of the first data transmission channel has been completed. In this implementation, the access network device performs S410 to S420, and the first core network device performs the specific processing of the aforementioned S510 to S520, which is the same as the above implementations in which the first core network device triggers the establishment of the first data transmission channel between the access network device and the first core network device, and therefore it will not be described repeatedly.

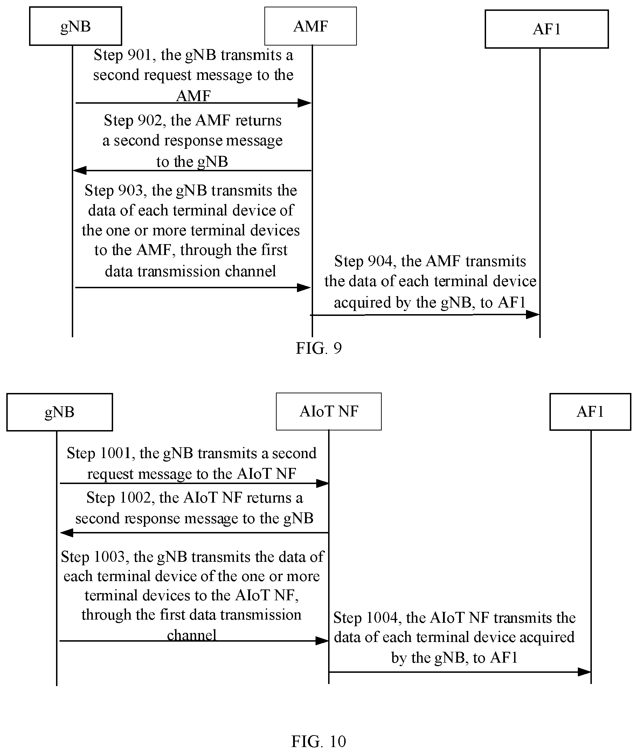

In conjunction with FIG. 9, the above implementations are exemplarily described. Taking the first core network device as an AMF, the access network device as a gNB, and the target AF as AF1 as an example, the specific description is as follows.

Step 901, the gNB transmits a second request message to the AMF, where the second request message is used to request to establish the first data transmission channel.

The second request message may carry an identity of AF1.

Before performing the step 901, the gNB may receive the first information; or the gNB may determine the one or more terminal devices of which data is allowed by AF1 to be acquired, based on the received first information; or the gNB may already acquire the data of each terminal device of the one or more terminal devices.

Step 902, the AMF returns a second response message to the gNB, where the second response message carries the parameter related to the first data transmission channel.

The parameter related to the first data transmission channel may include at least one of: a first IP address related to AF1, allocated by the AMF, or an N2-AP identity related to AF1, allocated by the AMF. That is, the AMF needs to allocate the first IP address or the N2-AP identity related to AF1 for the first data transmission channel, and return it to the gNB.

Step 903, the gNB transmits the data of each terminal device of the one or more terminal devices to the AMF, through the first data transmission channel.

Step 904, the AMF transmits the data of each terminal device acquired by the gNB, to AF1.

Here, Specific descriptions of the step 903 and the step 904 are the same as the specific descriptions of the aforementioned step 703 and step 704, which will not be repeated.

In conjunction with FIG. 10, another exemplary description of the aforementioned implementations is given. Taking the first core network device as an AIoT NF, the access network device as a gNB, and the target AF as AF1 as an example, the specific description is as follows.

Step 1001, the gNB transmits a second request message to the AIoT NF, where the second request message is used to request to establish the first data transmission channel.

Before performing the step 1001, the gNB may receive the first information; or the gNB may determine the one or more terminal devices of which data is allowed by AF1 to be acquired, based on the received first information; or the gNB may already acquire the data of each terminal device of the one or more terminal devices. The second request message may carry an identity of AF1.

Step 1002, the AIoT NF returns a second response message to the gNB, where the second response message carries the parameter related to the first data transmission channel.

The parameter related to the first data transmission channel may include at least one of: a first IP address related to AF1, allocated by the AIoT NF, and an N2-AP identity related to AF1, allocated by the AIoT NF. That is, the AIoT NF needs to allocate the first IP address or the N2-AP identity related to AF1 for the first data transmission channel, and return it to the gNB.

Step 1003, the gNB transmits the data of each terminal device of the one or more terminal devices to the AIoT NF, through the first data transmission channel.

Step 1004, the AIoT NF transmits the data of each terminal device acquired by the gNB, to AF1.

Here, specific descriptions of the step 1003 and the step 1004 are the same as the specific descriptions of the aforementioned step 803 and step 804, which will not be repeated.

In some possible implementations, the first core network device and the second core network device are included between the access network device and the target AF; the first data transmission channel needs to be established between the access network device and the first core network device, and a second data transmission channel needs to be established between the first core network device and the second core network device, where the second core network device is directly connected to the target AF. In this scenario, the second core network device may trigger the establishment of the data transmission channel.

The processing performed by the first core network may further include: transmitting, by the first core network device, a first request message, where the first request message is used to request to establish the first data transmission channel; and receiving, by the first core network device, a first response message, where the first response message is used to indicate that establishment of the first data transmission channel has been completed.

Correspondingly, the processing performed by the access network device may further include: receiving, by the access network device, the first request message, where the first request message is used to request to establish the first data transmission channel; and transmitting, by the access network device, the first response message, where the first response message is used to indicate that establishment of the first data transmission channel has been completed.

Specifically, before transmitting, by the first core network device, the first request message to the access network device, the method further includes: receiving, by the first core network device, a third request message transmitted by the second core network device, where the third request message is used to request to establish the second data transmission channel, and the second data transmission channel is a data transmission channel between the first core network device and the second core network device.

After receiving, by the first core network device, the first response message transmitted by the access network device, the method further includes: transmitting, by the first core network device, a third response message to the second core network device, where the third response message is used to indicate that establishment of the second data transmission channel has been completed.

Herein, the third request message carries at least one of: information related to the target AF, or a parameter related to the second data transmission channel. The parameter related to the second data transmission channel includes at least one of: a second IP address related to the target AF, or an identity of the second core network device.

Herein, the second IP address related to the target AF may specifically be an IP address related to the target AF, allocated by the second core network device.

Transmitting, by the first core network device, the first request message, may include: transmitting, by the first core network device, the first request message to the access network device; and receiving, by the first core network device, the first response message, may include: receiving, by the first core network device, the first response message transmitted by the access network device. Correspondingly, receiving, by the access network device, the first request message, may include: receiving, by the access network device, the first request message transmitted by the first core network; transmitting, by the access network device, the first response message, may include: transmitting, by the access network device, the first response message to the first core network device.

The information related to the target AF is the same as that of the above implementations, which will not be repeated. Descriptions of the first request message and the first response message are the same as those of the above implementations, which also will not be repeated.

This implementation is different from the above implementations in that the second core network device triggers the establishment of the second data transmission channel, by transmitting the third request message; on this basis, the first core network device further triggers the establishment of the first data transmission channel. After the first core network device determines that the establishment of the first data transmission channel with the access network device has been completed, based on the first response message, the second core network device confirms that the establishment of the second data transmission channel with the first core network device has been completed, based on the third response message.

The aforementioned second core network device may transmit the information related to the device of which data is allowed by the target AF to be acquired, to the first core network device. Therefore, a transmitting occasion of the aforementioned third request message may be when the second core network device transmits the information related to the device of which data is allowed by the target AF to be acquired, to the first core network device, or after the second core network device transmits the information related to the device of which data is allowed by the target AF to be acquired, to the first core network device. If the second core network device transmits the third request message at the same time when transmitting the information related to the device of which data is allowed by the target AF to be acquired, to the first core network device, the third request message may directly carry the information related to the target AF, the parameter related to the second data transmission channel, and the information related to the device of which data is allowed by the target AF to be acquired; if the second core network device transmits the third request message after transmitting the information related to the device of which data is allowed by the target AF to be acquired, to the first core network device, the third request message may only carry the information related to the target AF and the parameter related to the second data transmission channel.

After completing the aforementioned processing, the access network device may perform S410 to S420. The processing of S410 and S420 is the same as that of the aforementioned implementations, which will not be described repeatedly. The processing of S510 performed by the first core network device is the same as that of the aforementioned implementations, which also will not be described repeatedly.

Performing by the first core network device, S520 transmitting, by the first core network device, the data of each terminal device of the one or more terminal devices, may include: transmitting, by the first core network device through the second data transmission channel, the data of each terminal device of the one or more terminal devices to the second core network device, where the second core network device is used to forward the data of each terminal device to the target AF.

Here, transmitting, by the first core network device through the second data transmission channel, the data of each terminal device of the one or more terminal devices to the second core network device, may specifically include: parsing, by the first core network device, the aforementioned second information, to acquire the parameter related to the first data transmission channel and the data of each terminal device, carried in the second information; determining, by the first core network device, the target AF based on the parameter related to the first data transmission channel, and then determining the second data transmission channel related to the target AF; and transmitting, by the first core network device, fourth information to the second core network device through the second data transmission channel; where the fourth information carries the data of each terminal device, and the fourth information further carries the parameter related to the second data transmission channel.

Correspondingly, the processing of the second core network device may include: parsing, by the second core network device, the aforementioned fourth information, to acquire the parameter related to the second data transmission channel and the data of each terminal device, carried by the fourth information; determining, by the second core network device, the target AF based on the parameter related to the second data transmission channel; and transmitting, by the second core network device, the data of each terminal device of the one or more terminal devices directly to the target AF.

In the aforementioned implementations, the first core network device is one of: an AMF, a core network device related to the target AF, a UPF, and an SMF. The parameter related to the first data transmission channel include at least one of: a first IP address related to the target AF, an N2-AP identity related to the target AF, or a TE identity related to the target AF. The specific description of the parameter related to the first data transmission channel is the same as that of the aforementioned embodiments, which will not be repeated.

In a preferred example, the first core network device may be the AMF. The aforementioned second core network device may be the SMF or the NEF. For example, if AF1 belongs to a trusted third-party service provider, the second core network device is the SMF. If AF1 belongs to an untrusted third-party service provider, and the NEF is required to isolate the AMF from AF1, the second core network device is the NEF; that is, a channel per AF (i.e., the second data transmission channel) needs to be established between the AMF and the NEF. Alternatively, the aforementioned second core network device may be the SMF. However, if AF1 is the untrusted third-party service provider, the NEF is required to isolate the SMF from AF1. In this case, a data transmission channel needs to be established between the SMF and the NEF, and at this time, the data transmission channel between the SMF and the NEF may be called a third data transmission channel. In this way, the SMF receives the data of each terminal device from the gNB and forwards it to the NEF, and then the NEF transmits it to AF1 through the third data transmission channel.

The establishment of the aforementioned third data transmission channel may be triggered by the NEF, that is, the NEF may transmit a seventh request message, and the seventh request message may carry the information related to the target AF and a parameter related to the third data transmission channel. Then, after the SMF receives the seventh request message, the SMF transmits the third request message to the AMF; after the SMF receives the second response message transmitted by the AMF, the SMF transmits a seventh response message to the NEF, and the seventh response message is used to indicate that establishment of the third data transmission channel has been completed. Herein, the parameter related to the third data transmission channel may include at least one of: a third IP address related to the target AF, allocated by the NEF, or an identity of the NEF.

In this case, the processing of the SMF after receiving the fourth information may include: parsing, by the SMF, the aforementioned fourth information, to acquire a parameter related to the second data transmission channel and the data of each terminal device, carried by the fourth information; determining, by the SMF, the target AF based on the parameter related to the second data transmission channel; determining the third data transmission channel based on the target AF; transmitting, by the SMF, fifth information to the NEF through the third data transmission channel, where the fifth information carries the data of each terminal device of the one or more terminal devices and the parameter related to the third data transmission channel. Correspondingly, after receiving the fifth information, the NEF parses the aforementioned fifth information, to acquire the parameter related to the third data transmission channel and the data of each terminal device, carried by the fifth information; the NEF determines the target AF based on the parameter related to the third data transmission channel; and the NEF transmits the data of each terminal device of the one or more terminal devices to the target AF.

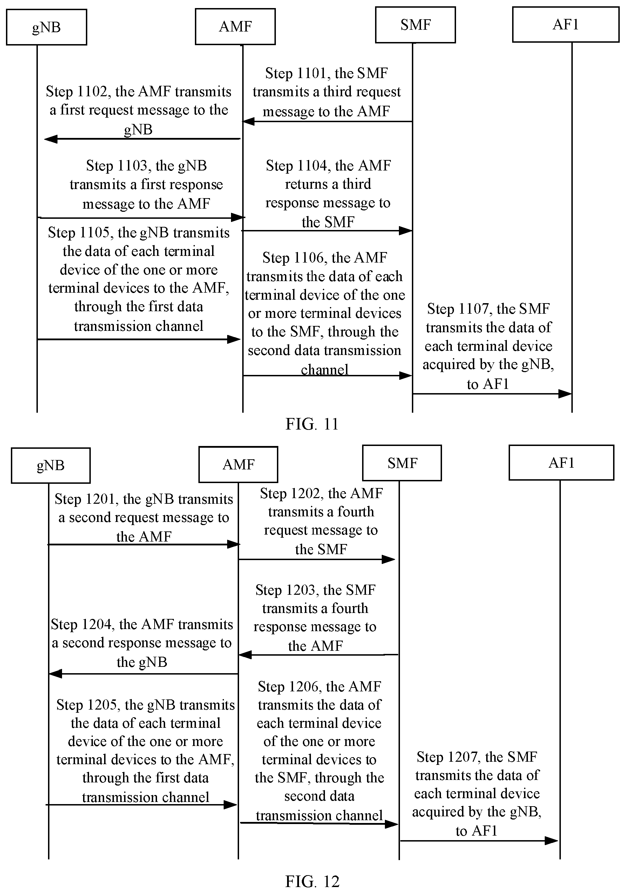

In conjunction with FIG. 11, the above implementations are exemplarily described. Taking the first core network device as an AMF, the second core network device as an SMF, the access network device as a gNB, and the target AF as AF1 as an example, the specific description is as follows.

Step 1101, the SMF transmits a third request message to the AMF, where the third request message is used to request to establish the second data transmission channel, where the second data transmission channel is a data transmission channel between the SMF and the AMF.

Before performing the step 1101, the AMF has received the information related to the device of which data is allowed by AF1 to be acquired, through the SMF. The step 1101 may be performed when the SMF transmits the information related to the device of which data is allowed by AF1 to be acquired to the AMF, or may be performed after the SMF transmits the information related to the device of which data is allowed by AF1 to be acquired to the AMF. If a transmitting occasion of the third request message is when the SMF transmits the information related to the device of which data is allowed by AF1 to be acquired to the AMF, the third request message may carry information related to AF1, the parameter related to the second data transmission channel, and the information related to the device of which data is allowed by AF1 to be acquired. If the transmitting occasion of the third request message is after the SMF transmits the information related to the device of which data is allowed by AF1 to be acquired to the AMF, the third request message may carry the information related to AF1 and the parameter related to the second data transmission channel.

The information related to AF1 may include an ID of AF1. The parameter related to the second data transmission channel may include: a second IP address allocated by the SMF to a channel of AF1 and an SMF ID.

Step 1102, the AMF transmits a first request message to the gNB, where the first request message is used to request to establish the first data transmission channel.

It should be pointed out that the step 1102 may be performed when the AMF transmits the first information to the gNB, or may be performed after the AMF transmits the first information to the gNB.

More specifically, a transmitting occasion of the first request message may be after the AMF transmits the first information to the gNB, or when the AMF transmits the first information to the gNB. If the transmitting occasion of the first request message is when the AMF transmits the first information to the gNB, the first request message may be carried in the first information; or the first request message carried by the third information may be transmitted at the same time when the first information is transmitted. If the transmitting occasion of the first request message is after the AMF transmits the first information to the gNB, the first request message may be carried by the third information.

Herein, the first request message carries the information related to AF1 and the parameter related to the first data transmission channel. Specifically, the information related to AF1 may be an ID of AF1. The parameter related to the first data transmission channel may include at least one of: a first IP address related to AF1, allocated by the AMF, or an N2-AP identity related to AF1, allocated by the AMF.

Step 1103, the gNB transmits a first response message to the AMF, where the first response message is used to indicate that establishment of the first data transmission channel has been completed.

Step 1104, the AMF returns a third response message to the SMF, where the third response message is used to indicate that establishment of the second data transmission channel has been completed.

Step 1105, the gNB transmits the data of each terminal device of the one or more terminal devices to the AMF, through the first data transmission channel.

It should be pointed out that although not illustrated in FIG. 11, after the gNB performs the step 1103 and before the gNB performs the step 1105, the gNB needs to first determine the one or more terminal devices of which data is allowed by AF1 to be acquired, based on the first information; and the gNB acquires the data of each terminal device of the one or more terminal devices, and then performs the step 1105.

Step 1106, the AMF transmits the data of each terminal device of the one or more terminal devices to the SMF, through the second data transmission channel.

Step 1107, the SMF transmits the data of each terminal device acquired by the gNB, to AF1.

Here, in the step 1105, transmitting, by the gNB through the first data transmission channel, the data of each terminal device of the one or more terminal devices to the AMF, may be: transmitting, by the gNB through the first data transmission channel, the second information to the AMF, where the second information carries the data of each terminal device of the one or more terminal devices, and the second information carries the parameter related to the first data transmission channel. The second information may be uplink information.

Correspondingly, in the step 1106, transmitting, by the AMF through the second data transmission channel, the data of each terminal device of the one or more terminal devices to the SMF, may be: parsing, by the AMF, the aforementioned second information, to acquire the parameter related to the first data transmission channel and the data of each terminal device, carried by the second information; determining, by the AMF, that the target AF is AF1, based on the parameter related to the first data transmission channel, and then determining the second data transmission channel related to AF1; transmitting, by the AMF through the second data transmission channel, the fourth information to the SMF, where the fourth information carries the data of each terminal device of the one or more terminal devices, and the fourth information carries the parameter related to the second data transmission channel. The fourth information may be uplink information.

In the step 1107, transmitting, by the SMF, the data of each terminal device acquired by the gNB to AF1, may include: parsing, by the SMF, the aforementioned fourth information, to acquire the parameter related to the second data transmission channel and the data of each terminal device, carried by the fourth information; determining, by the SMF, that the target AF is AF1, based on the parameter related to the second data transmission channel; transmitting, by the SMF, the data of each terminal device of the one or more terminal devices directly to the AF1.

It should also be noted that the aforementioned SMF may also be replaced by the NEF; for example, if AF1 is an untrusted third-party service provider, the NEF is still needed to isolate the AMF from AF1, and then a channel per AF (i.e., the second data transmission channel) needs to be established between the AMF and the NEF. Alternatively, the NEF may be set between the SMF and AF1; for example, if AF1 is an untrusted third-party service provider, the NEF is required to isolate the SMF from AF1. The specific processing manner for the above two cases has been detailed in the aforementioned implementations, which will not be described repeatedly here.

In some possible implementations, the first core network device and the second core network device are included between the access network device and the target AF; the first data transmission channel needs to be established between the access network device and the first core network device, and the second data transmission channel needs to be established between the first core network device and the second core network device; the second core network device is directly connected to the target AF. In this scenario, the access network device may trigger the establishment of the data transmission channel.

The processing performed by the access network device may further include: transmitting, by the access network device, the second request message, where the second request message is used to request to establish the first data transmission channel; receiving, by the access network device, the second response message, where the second response message carries the parameter related to the first data transmission channel.

Correspondingly, the processing performed by the first core network device may further include: receiving, by the first core network device, the second request message, where the second request message is used to request to establish the first data transmission channel; transmitting, by the first core network device, the second response message, where the second response message carries the parameter related to the first data transmission channel.

Specifically, receiving, by the first core network device, the second request message, includes: receiving, by the first core network device, the second request message transmitted by the access network device. Transmitting, by the first core network device, the second response message, includes: transmitting, by the first core network device, the second response message to the access network device. Correspondingly, transmitting, by the access network device, the second request message, may include: transmitting, by the access network device, the second request message to the first core network; receiving, by the access network device, the second response message, may include: receiving, by the access network device, the second response message transmitted by the first core network device.

After receiving, by the first core network device, the second request message transmitted by the access network device, the method further includes: transmitting, by the first core network device, a fourth request message to the second core network device; where the fourth request message is used to request to establish a second data transmission channel, and the second data transmission channel is a data transmission channel between the first core network device and the second core network device.

Before transmitting, by the first core network device, the second response message to the access network device, the method further includes: receiving, by the first core network device, a fourth response message transmitted by the second core network device, where the fourth response message carries a parameter related to the second data transmission channel.

Herein, the fourth request message carries the information related to the target AF. 28. The parameter related to the second data transmission channel includes at least one of: a second IP address related to the target AF, or an identity of the second core network device.

Herein, the second IP address related to the target AF may specifically be an IP address related to the target AF, allocated by the second core network device.

The information related to the target AF is the same as that of the above implementations, which will not be repeated. The descriptions of the second request message and the second response message are the same as those of the aforementioned implementations, which also will not be repeated.

This implementation is different from the aforementioned implementations in that the access network device transmits the second request message to trigger the establishment of the first data transmission channel; on this basis, the first core network device further triggers the establishment of the second data transmission channel with the second core network device. On the basis that the second core network device has completed the establishment of the second data transmission channel, the first core network device confirms that establishment of the first data transmission channel has been completed.

The transmitting occasion of the second request message may be after the access network device receives the aforementioned first information and before the access network device transmits the data of each terminal device.

After completing the above processing, the access network device may perform S410 to S420. The processing of S410 and S420 is the same as that of the aforementioned implementations, which will not be described repeatedly. The processing of S510 to S520 performed by the first core network device is also the same as the specific description of the aforementioned implementations including the first data transmission channel and the second data transmission channel, which also will not be described repeatedly.

In the aforementioned implementations, the first core network device is one of: an AMF, a core network device related to the target AF, a UPF, and an SMF. The specific description of the parameter related to the first data transmission channel is the same as that of the aforementioned implementations, which will not be repeated.

In a preferred example, the first core network device is the AMF. The aforementioned second core network device may be the SMF or the NEF. For example, if AF1 belongs to a trusted third-party service provider, the second core network device is the SMF. If AF1 is an untrusted third-party service provider, and the NEF is required to isolate the AMF from AF1, the second core network device is the NEF. Alternatively, the aforementioned second core network device may be the SMF. However, if AF1 is an untrusted third-party service provider, NEF is required to isolate the SMF from AF1. In this case, a data transmission channel needs to be established between the SMF and the NEF, and at this time, the data transmission channel between the SMF and the NEF may be called a third data transmission channel. In this way, the SMF receives the data of each terminal device from the gNB and forwards it to the NEF, and then the NEF transmits it to AF1 through the third data transmission channel.

It should be understood that the establishment of the aforementioned third data transmission channel may be triggered by the SMF, that is, after receiving the fourth request message, the SMF may transmit an eighth request message to the NEF, where the eighth request message may carry the information related to the target AF. After receiving the eighth request message, the NEF transmits an eighth response message to the SMF, where the eighth response message is used to indicate that establishment of the third data transmission channel has been completed. Herein, the eighth response message carries a parameter related to the third data transmission channel, which may specifically include at least one of: a third IP address related to the target AF, allocated by the NEF, or an identity of the NEF. Furthermore, after receiving the eighth response message, the SMF transmits the fourth response message to the AMF.

In conjunction with FIG. 12, the aforementioned implementations are exemplarily described. Taking the first core network device as an AMF, the second core network device as an SMF, the access network device as a gNB, and the target AF as AF1 as an example, the specific description is as follows.

Step 1201, the gNB transmits a second request message to the AMF, where the second request message is used to request to establish the first data transmission channel.

Before performing the step 1201, the gNB may receive the first information; or the gNB may determine the one or more terminal devices of which data is allowed by AF1 to be acquired, based on the received first information; or the gNB may already acquire the data of each terminal device of the one or more terminal devices. The second request message may carry an identity of AF1.

Step 1202, the AMF transmits a fourth request message to the SMF, where the fourth request message is used to request to establish the second data transmission channel. The fourth request message may carry the identity of AF1.

Step 1203, the SMF transmits a fourth response message to the AMF, where the fourth response message carries the parameter related to the second data transmission channel.

The parameter related to the second data transmission channel include: a second IP address related to AF1, allocated for the second data transmission channel and/or an SMF ID.

Step 1204, the AMF transmits a second response message to the gNB, where the second response message carries the parameter related to the first data transmission channel.

The parameter related to the first data transmission channel may include at least one of: a first IP address related to AF1, allocated by the AMF and an N2-AP identity related to AF1, allocated by the AMF. That is, the AMF needs to allocate the first IP address or the N2-AP identity related to AF1 for the first data transmission channel, and return it to the gNB.

Step 1205, the gNB transmits the data of each terminal device of the one or more terminal devices to the AMF, through the first data transmission channel.

Step 1206, the AMF transmits the data of each terminal device of the one or more terminal devices to the SMF, through the second data transmission channel.

Step 1207, the SMF transmits the data of each terminal device acquired by the gNB, to AF1.

Here, detailed descriptions of the step 1205 to the step 1207 are the same as those of the step 1105 to the step 1107 in the aforementioned embodiments, which will not be repeated.

In some possible implementations, the first core network device and the second core network device are included between the access network device and the target AF; between the access network device and the first core network device, information needs to be forwarded through the second core network device to establish the first data transmission channel. In this scenario, the access network device may trigger the establishment of the first data transmission channel.

The processing performed by the access network device may further include: transmitting, by the access network device, the second request message, where the second request message is used to request to establish the first data transmission channel; receiving, by the access network device, the second response message, where the second response message carries the parameter related to the first data transmission channel.

Specifically, transmitting, by the access network device, the second request message, includes: transmitting, by the access network device through the second core network device, the second request message to the first core network device. Receiving, by the access network device, the second response message, includes: receiving, by the access network device through the second core network device, the second response message transmitted by the first core network device. The second response message carries the parameter related to the first data transmission channel.

Correspondingly, receiving, by the first core network device, the second request message, includes: receiving, by the first core network device, the second request message transmitted by the second core network device. Transmitting, by the first core network device, the second response message, includes: transmitting, by the first core network device, the second response message to the second core network device.

Specifically, receiving, by the first core network device, the second request message transmitted by the second core network device, includes: receiving, by the first core network device through the second core network device, the second request message transmitted by the access network device. Transmitting, by the first core network device, the second response message to the second core network device, includes: transmitting, by the first core network device through the second core network device, the second response message to the access network device.

Herein, the processing of the second core network device may include: receiving, by the second core network device through the third core network device, the second request message transmitted by the access network device; and transmitting, by the second core network device, the second request message to the first core network device. It may further include: receiving, by the second core network device, the second response message transmitted by the first core network device; and transmitting, by the second core network device through the third core network device, the second response message to the access network device.

The first core network device is one of: an AMF, a core network device related to the target AF, a UPF, or an SMF; the second core network device is an NEF. Alternatively, the first core network device is one of: an AMF, a core network device related to the target AF, and a UPF; the second core network device is one of: an SMF, and an NEF.

The specific description of the parameter related to the first data transmission channel is the same as that of the aforementioned embodiments, which will not be repeated.

**In** a preferred example, in this implementation, the first core network device may be the UPF. The second core network device may be the SMF. The third core network device may be the AMF. In this example, the first core network device is able to establish a tunnel, and correspondingly, the parameter related to the first data transmission channel include at least one of: a first IP address related to the target AF, or a TE identity related to the target AF. Herein, the first IP address related to the target AF may specifically refer to an IP address related to the target AF, allocated by the first core network device. The TE identity related to the target AF may specifically be: a TE identity related to the target AF, allocated by the first core network device.

The transmitting occasion of the second request message may be after the access network device receives the aforementioned first information and before the access network device transmits the data of each terminal device. The specific content of the second request message may be the same as that of the aforementioned implementations, which will not be repeated.

In this implementation, the first core network device may not be directly connected to the access network device, but information may be forwarded through other core network devices, so that the first core network device can establish the first data transmission channel with the access network device.

After completing the above processing, the access network device may perform S410 to S420. The processing of S410-S420 is the same as that of the aforementioned implementations, which will not be described repeatedly. The processing of S510 to S520 performed by the first core network device is also the same as the specific description of the aforementioned implementations including the first data transmission channel, which also will not be described repeatedly.

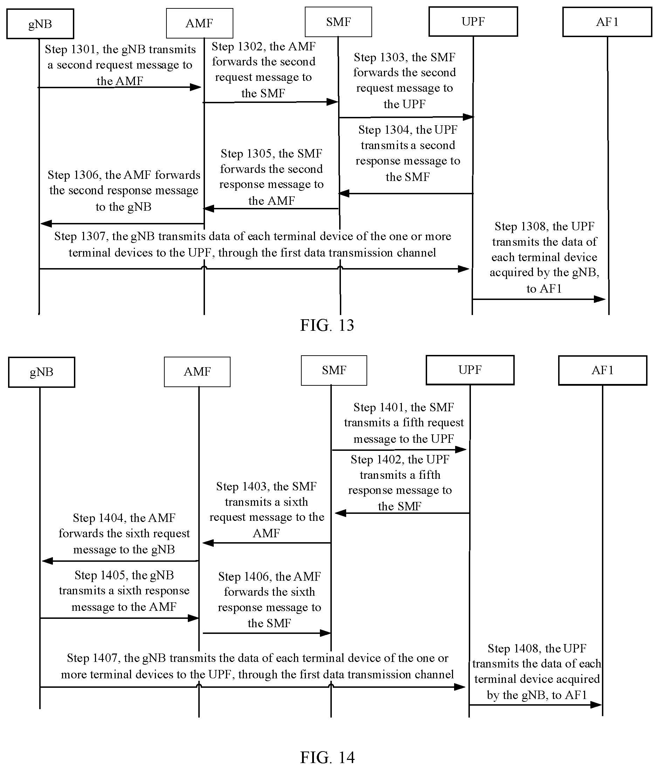

In conjunction with FIG. 13, the above implementations are exemplarily described. Taking the first core network device as a UPF, the second core network device as an SMF, the third core network device as an AMF, the access network device as a gNB, and the target AF as AF1 as an example, the specific description is as follows.

Step 1301, the gNB transmits a second request message to the AMF, where the second request message is used to request to establish the first data transmission channel. The specific description of the step 1301 is the same as that of the aforementioned step 1201, which will not repeated.

Step 1302, the AMF forwards the second request message to the SMF.

Step 1303, the SMF forwards the second request message to the UPF.

Step 1304, the UPF transmits a second response message to the SMF, where the second response message carries the parameter related to the first data transmission channel.

The parameter related to the first data transmission channel may include at least one of: a first IP address related to AF1 or a tunnel TEID related to AF1, allocated by the UPF.

Step 1305, the SMF forwards the second response message to the AMF.

Step 1306, the AMF forwards the second response message to the gNB.

Step 1307, the gNB transmits data of each terminal device of the one or more terminal devices to the UPF, through the first data transmission channel.

It should be pointed out that although not illustrated in FIG. 13, before the gNB performs the step 1307, the gNB needs to first determine the one or more terminal devices of which data is allowed by AF1 to be acquired, based on the first information; and the gNB acquires the data of each terminal device of the one or more terminal devices, and then performs the step 1307.

Step 1308, the UPF transmits the data of each terminal device acquired by the gNB, to AF1.

Here, in the step 1307, transmitting, by the gNB through the first data transmission channel, the data of each terminal device of the one or more terminal devices to the UPF, may be: transmitting, by the gNB through the first data transmission channel, the second information to the UPF, where the second information carries the data of each terminal device of the one or more terminal devices, and the second information carries the parameter related to the first data transmission channel. The second information may be uplink information.

Correspondingly, in the step 1308, transmitting, by the UPF, the data of each terminal device acquired by the gNB, to AF1, may be: parsing, by the UPF, the aforementioned second information, to acquire the parameter related to the first data transmission channel and the data of each terminal device, carried in the second information; determining, by the UPF, that the target AF is AF1, based on the parameter related to the first data transmission channel, and then transmitting, by the UPF, the data of each terminal device of the one or more terminal devices to AF1.

In some possible implementations, the first core network device and the second core network device are included between the access network device and the target AF; between the access network device and the first core network device, information needs to be forwarded through the second core network device, to establish the first data transmission channel. In this scenario, the second core network device may trigger the establishment of the first data transmission channel.

The processing of the second core network device may include: transmitting, by the second core network device, a fifth request message to the first core network device, where the fifth request message is used to request the first core network device to establish the first data transmission channel; and receiving, by the second core network device, a fifth response message transmitted by the first core network device, where the fifth response message carries the parameter related to the first data transmission channel.

After receiving the fifth response message by the second core network device, the method may further include: transmitting, by the second core network device, the first request message to the access network device, where the first request message is used to request the access network device to establish the first data transmission channel; and receiving, by the second core network device, the first response message transmitted by the access network device.

Accordingly, the processing of the first core network device may include: receiving, by the first core network device, the fifth request message transmitted by the second core network device, where the fifth request message is used to request the first core network device to establish the first data transmission channel, and the fifth request message carries the information related to the target AF;

The first core network device transmits the fifth response message to the second core network device; where the fifth response message is used by the second core network device to transmit a sixth request message to the access network device, where the sixth request message is used to request the access network device to establish the first data transmission channel, the fifth response message carries the parameter related to the first data transmission channel, and the sixth request message carries the information related to the target AF and the parameter related to the first data transmission channel.

The processing performed by the access network device may further include: receiving, by the access network device, the sixth request message, where the sixth request message is used to request to establish the first data transmission channel; and transmitting, by the access network device, a sixth response message.

Specifically, receiving, by the access network device, the sixth request message, includes: receiving, by the access network device, the sixth request message transmitted by the second core network device. Transmitting, by the access network device, the sixth response message, includes: transmitting, by the access network device, the sixth response message to the second core network device.

Receiving, by the access network device, the sixth request message transmitted by the second core network device, includes: transmitting, by the access network device through the third core network device, the sixth request message to the second core network device. Transmitting, by the access network device, the sixth response message to the second core network device, may include: transmitting, by the access network device through the third core network device, the sixth response message to the second core network device.

Herein, the fifth request message may carry the information related to the target AF. The fifth response message may carry the parameter related to the first data transmission channel. The sixth request message carries the information related to the target AF and the parameter related to the first data transmission channel.

The first core network device is one of: an AMF, a core network device related to the target AF, a UPF, and an SMF; the second core network device is an NEF. Alternatively, the first core network device is one of: an AMF, a core network device related to the target AF, and a UPF; the second core network device is one of: an SMF, and an NEF.

The specific description of the parameter related to the first data transmission channel is the same as that of the aforementioned embodiments, which will not be repeated.

In a preferred example, in this implementation, the first core network device may be the UPF. The second core network device may be the SMF. The third core network device may be the AMF. In this example, the first core network device is able to establish a tunnel, and then correspondingly, the parameter related to the first data transmission channel includes at least one of: a first IP address related to the target AF, or a TE identity related to the target AF.

The aforementioned second core network device may transmit the information related to the device of which data is allowed by the target AF to be acquired, to the first core network device. Therefore, the transmitting occasion of the first request message may be at the same time when the second core network device transmits the information related to the device of which data is allowed by the target AF to be acquired to the first core network device, or may be after the second core network device transmits the information related to the device of which data is allowed by the target AF to be acquired to the first core network device. If the second core network device transmits the first request message at the same time when transmitting the information related to the device of which data is allowed by the target AF to be acquired to the first core network device, the first request message may directly carry the information related to the target AF, the parameter related to the first data transmission channel, and the information related to the device of which data is allowed by the target AF to be acquired; if the second core network device transmits the first request message after transmitting the information related to the device of which data is allowed by the target AF to be acquired to the first core network device, the first request message may only carry the information related to the target AF and the parameter related to the first data transmission channel.

In this implementation, the first core network device may be the UPF. The second core network device may be the SMF. The third core network device may be the AMF.

In this implementation, the first core network device may not be directly connected to the access network device, but information may be forwarded through other core network devices, so that the first core network device can establish the first data transmission channel with the access network device.

After completing the above processing, the access network device may perform S410 to S420. The processing of S410 to S420 is the same as that of the aforementioned implementations, which is not described repeatedly. The processing of S510 to S520 performed by the first core network device is also the same as the specific description of the aforementioned implementations including the first data transmission channel, which also will not be described repeatedly.

In conjunction with FIG. 14, the aforementioned implementations are exemplarily described. Taking the first core network device as a UPF, the second core network device as an SMF, the third core network device as an AMF, the access network device as a gNB, and the target AF as AF1 as an example, the specific description is as follows.

Step 1401, the SMF transmits a fifth request message to the UPF, where the fifth request message is used to request the first core network device to establish the first data transmission channel.

The fifth request message may carry information related to AF1; the information related to AF1 may include: an ID of AF1 or an ID of a service provider to which AF1 belongs.

Step 1402, the UPF transmits a fifth response message to the SMF, where the fifth response message carries the information related to AF1 and the parameter related to the first data transmission channel.

The parameter related to the first data transmission channel may include: a first IP address related to AF1, allocated by the UPF, and/or a TE identity related to AF1, allocated by the UPF. The TE identity may be a TEID.

Step 1403, the SMF transmits a sixth request message to the AMF, where the first request message carries the information related to AF1 and the parameter related to the first data transmission channel.

Step 1404, the AMF forwards the sixth request message to the gNB.

Step 1405, the gNB transmits a sixth response message to the AMF.

Step 1406, the AMF forwards the sixth response message to the SMF.

Step 1407, the gNB transmits the data of each terminal device of the one or more terminal devices to the UPF, through the first data transmission channel.

Step 1408, the UPF transmits the data of each terminal device acquired by the gNB, to AF1.

Here, the processing of the step 1407 and the step 1408 is the same as that of the step 1307 and the step 1308 in the above embodiments, which will not be described repeatedly.

By adopting the above solutions, the data of each terminal device of the one or more terminal devices is acquired at the access network device, at the granularity of the target AF, and then the data of each terminal device of the one or more terminal devices related to the target AF is transmitted through the first data transmission channel related to the target AF. In this way, data respectively corresponding to one or more terminal devices related to each AF may be transmitted through a channel at the granularity of each AF, which can reduce system complexity, reduce signaling interaction, and improve system processing efficiency, compared with processes such as registering each terminal device respectively and transmitting data through a channel at the granularity of a terminal device, etc.

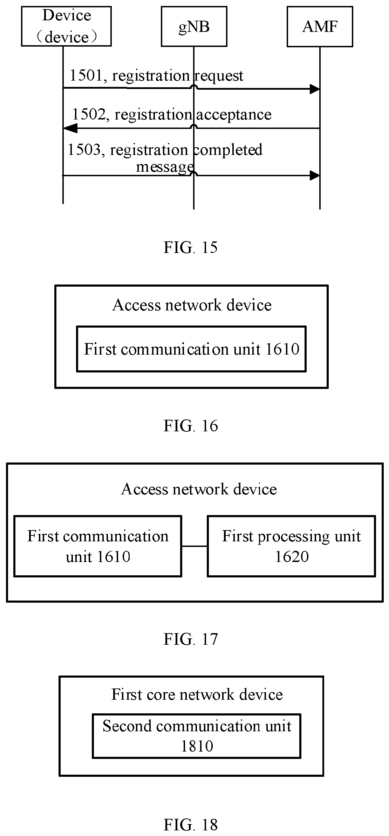

The effect of the solutions provided in the embodiments is explained in conjunction with the processing of the terminal device in the related technology. In a traditional 5G architecture, a registration procedure of any device (e.g., which may be a zero power consumption terminal) is shown in FIG. 15, and the registration procedure may include: step 1501, transmitting, by a device (Device), such as the zero power consumption terminal, a registration request to the AMF, through the gNB; step 1502, transmitting, by the AMF, a registration acceptance to Device; step 1503, transmitting, by Device, a registration completed message to the AMF.

The registration procedure shown in FIG. 15 also omits an RRC (Radio Resource Control) connection establishment process between the UE and the RAN, an N2 message interaction process between the RAN and the AMF, and a subscription data acquiring process between the AMF and the UDM, etc. The aforementioned multiple processes are managed at the granularity of each device, where the management may include temporary allocation of each device, and maintenance of the connection state or mobility management state of each device, or the like. Also, any device needs to establish a PDU session in order to transmit or receive data (even if it only receives or transmits a small amount of data).

It can be seen that the extremely low complexity characteristic of the passive zero power consumption terminal is not considered in the processing of performing each process at the granularity of each device in the aforementioned related technology. Such a complex protocol stack and complex communication procedure cannot ensure the system processing efficiency after the zero power consumption terminal joins the mobile communication system.

However, by adopting the solutions provided in the embodiments, various processes such as registration, RRC connection, etc., are no longer performed for each terminal device separately (especially the zero power consumption terminal). Device(s) of which data is allowed to be acquired by the access network device, are authorized at the granularity of AF, so that the access network device may acquire the data of each terminal device of the one or more terminal devices at one time, and transmit it to the corresponding AF at the granularity of AF, thereby simplifying the system processing procedure, reducing the system complexity and reducing the signaling interaction between the terminal device and the network, and further improving the system processing efficiency while being more matched to the characteristic of the zero power consumption terminal.

FIG. 16 is a schematic diagram of a composition structure of an access network device according to an embodiment of the present application, which includes:
a first communication unit 1610, configured to acquire data of each terminal device of one or more terminal devices, where the one or more terminal devices are associated with a target application function (AF); and transmit, through a first data transmission channel, the data of each terminal device of the one or more terminal devices, where the first data transmission channel is related to the target AF.

The first data transmission channel is a data transmission channel between the access network device and a first core network device.

The first communication unit is configured to receive a first request message, where the first request message is used to request to establish the first data transmission channel; and transmit a first response message, where the first response message is used to indicate that establishment of the first data transmission channel has been completed.

The first request message carries information related to the target AF and a parameter related to the first data transmission channel.

The first communication unit is configured to transmit a second request message, where the second request message is used to request to establish the first data transmission channel; and receive a second response message, where the second response message carries a parameter related to the first data transmission channel.

The second request message carries information related to the target AF.

The information related to the target AF includes at least one of: an identity of the target AF, or an identity of a service provider to which the target AF belongs.

The parameter related to the first data transmission channel includes at least one of: a first Internet Protocol (IP) address related to the target AF, an N2-application layer protocol (AP) identity related to the target AF, or a tunnel TE identity related to the target AF.

The first core network device is one of: an access and mobility management function (AMF), a core network device related to the target AF, a user plane function (UPF), and a session management function (SMF).

As shown in FIG. 17, the access network device further includes:
a first processing unit 1620, configured to determine the one or more terminal devices based on first information, where each terminal device of the one or more terminal devices is the device of which data is allowed by the target AF to be acquired; and
the first communication unit 1610, configured to receive the first information, where the first information carries information related to a device of which data is allowed by the target AF to be acquired.

The information related to the device of which data is allowed by the target AF to be acquired, includes at least one of: identity-related information of the device of which data is allowed by the target AF to be acquired, or parameter information of the device of which data is allowed by the target AF to be acquired.

The parameter information of the device of which data is allowed by the target AF to be acquired, includes at least one of: a signal frequency of the device of which data is allowed by the target AF to be acquired, a signal waveform of the device of which data is allowed by the target AF to be acquired, a data acquiring time of the device of which data is allowed by the target AF to be acquired, or a location of the device of which data is allowed by the target AF to be acquired.

The terminal device is a zero power consumption terminal.

The access network device in the embodiments of the present application can implement the corresponding functions of the access network device in the aforementioned method embodiments. The procedures, functions, implementations and beneficial effects corresponding to various modules (sub-modules, units or components, or the like) in the access network device may be found in the corresponding description in the aforementioned method embodiments, which will not be repeated here. The functions described regarding various modules (sub-modules, units or components, or the like) in the access network device in the embodiments of the application may be implemented by different modules (sub-modules, units or components, or the like.), or may be implemented by the same module (sub-module, unit or component, or the like).

FIG. 18 is a schematic diagram of a composition structure of a first core network device according to an embodiment of the present application, which includes:
a second communication unit 1810, configured to receive, through a first data transmission channel, data of each terminal device of one or more terminal devices; where the first data transmission channel is related to a target application function (AF), and the one or more terminal devices are associated with the target AF; and transmit the data of each terminal device of the one or more terminal devices.

The first data transmission channel is a data transmission channel between the first core network device and an access network device.

The second communication unit is configured to transmit a first request message, where the first request message is used to request to establish the first data transmission channel; and receive a first response message, where the first response message is used to indicate that establishment of the first data transmission channel has been completed.

The first request message carries information related to the target AF and a parameter related to the first data transmission channel.

The second communication unit is configured to transmit the first request message to the access network device; and receive the first response message transmitted by the access network device.

The second communication unit is configured to receive a third request message transmitted by a second core network device, before transmitting the first request message to the access network device, where the third request message is used to request to establish a second data transmission channel, where the second data transmission channel is a data transmission channel between the first core network device and the second core network device.

The second communication unit is configured to transmit a third response message to the second core network device, after receiving the first response message transmitted by the access network device, where the third response message is used to indicate that establishment of the second data transmission channel has been completed.

The third request message carries at least one of: information related to the target AF, or a parameter related to the second data transmission channel.

The second communication unit is configured to receive a second request message, where the second request message is used to request to establish the first data transmission channel; and transmit a second response message, where the second response message carries a parameter related to the first data transmission channel.

The second request message carries information related to the target AF.

The second communication unit is configured to receive the second request message transmitted by the access network device; and transmit the second response message to the access network device.

The second communication unit is configured to transmit a fourth request message to a second core network device, after receiving the second request message transmitted by the access network device; where the fourth request message is used to request to establish a second data transmission channel, and the second data transmission channel is a data transmission channel between the first core network device and the second core network device.

The second communication unit is configured to receive a fourth response message transmitted by the second core network device, before transmitting the second response message to the access network device, where the fourth response message carries a parameter related to the second data transmission channel.

The fourth request message carries the information related to the target AF.

The parameter related to the second data transmission channel includes at least one of: a second IP address related to the target AF, or an identity of the second core network device.

The second communication unit is configured to transmit, through the second data transmission channel, the data of each terminal device of the one or more terminal devices to the second core network device; where the second core network device is used to forward the data of each terminal device to the target AF.

The second communication unit is configured to receive the second request message transmitted by a second core network device; and transmit the second response message to the second core network device.

The second communication unit is configured to receive a fifth request message transmitted by a second core network device; where the fifth request message is used to request the first core network device to establish the first data transmission channel, and the fifth request message carries information related to the target AF; and
transmit a fifth response message to the second core network device; where the fifth response message is used by the second core network device to transmit a sixth request message to the access network device, the sixth request message is used to request the access network device to establish the first data transmission channel, the fifth response message carries a parameter related to the first data transmission channel, and the sixth request message carries the information related to the target AF and the parameter related to the first data transmission channel.

The parameter related to the first data transmission channel includes at least one of: a first IP address related to the target AF, an N2-AP identity related to the target AF, or a TE identity related to the target AF.

The information related to the target AF includes at least one of: an identity of the target AF, or an identity of a service provider to which the target AF belongs.

The first core network device is one of: an access and mobility management function (AMF), a core network device related to the target AF, a user plane function (UPF), and a session management function (SMF).

The second core network device is one of: a session management function (SMF), and a network element function (NEF).

The second communication unit is configured to transmit the data of each terminal device of the one or more terminal devices to the target AF.

The second communication unit is configured to receive information related to a device of which data is allowed by the target AF to be acquired; and transmit first information, where the first information carries the information related to the device of which data is allowed by the target AF to be acquired.

The second communication unit is configured to perform one of: receiving the information related to the device of which data is allowed by the target AF to be acquired, which is transmitted by the target AF; or receiving the information related to the device of which data is allowed by the target AF to be acquired, which is transmitted by a second core network device.

The information related to the device of which data is allowed by the target AF to be acquired includes at least one of: identity-related information of the device of which data is allowed by the target AF to be acquired; or parameter information of the device of which data is allowed by the target AF to be acquired.

The parameter information of the device of which data is allowed by the target AF to be acquired, includes at least one of: a signal frequency of the device of which data is allowed by the target AF to be acquired; a signal waveform of the device of which data is allowed by the target AF to be acquired; a data acquiring time of the device of which data is allowed by the target AF to be acquired; or a location of the device of which data is allowed by the target AF to be acquired.

The terminal device is a zero power consumption terminal.

The first core network device in the embodiments of the present application can implement the corresponding functions of the first core network device in the aforementioned method embodiments. The procedures, functions, implementations and beneficial effects corresponding to various modules (sub-modules, units or components, or the like) in the first core network device may be found in the corresponding description in the aforementioned method embodiments, which will not be repeated here. It should be noted that the first core network device may further include a second processing unit, and the second processing unit may determine the target AF related to received data of the terminal device, and then control the second communication unit to transmit the data of the terminal device and other processing, but it is not shown in FIG. 18. The functions described regarding various modules (sub-modules, units or components, or the like) in the first core network device in the embodiments of the application may be implemented by different modules (sub-modules, units or components, or the like.), or may be implemented by the same module (sub-module, unit or component, or the like).

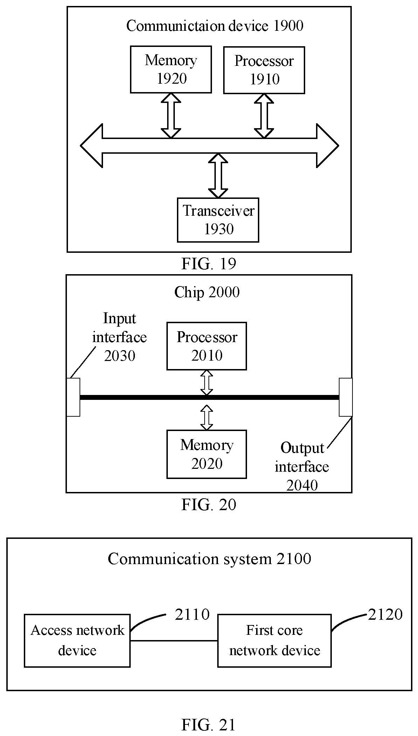

FIG. 19 is a schematic structural diagram of a communication device 1900 according to the embodiments of the present application. The communication device 1900 includes a processor 1910, and the processor 1910 may call a computer program from a memory and run the computer program, to cause the communication device 1900 to implement the methods in the embodiments of the present application.

In a possible implementation, the communication device 1900 may further include a memory 1920. Herein, the processor 1910 may call a computer program from the memory 1920 and run the computer program, to cause the communication device 1900 to implement the methods in the embodiments of the present application.

Herein, the memory 1920 may be a separate device independent of the processor 1910, or may be integrated into the processor 1910.

In a possible implementation, the communication device 1900 may further include a transceiver 1930, and the processor 1910 may control the transceiver 1930 to communicate with other devices, and specifically, may control the transceiver 1930 to transmit information or data to other devices, or receive information or data transmitted by other devices.

Herein, the transceiver 1930 may include a transmitter and a receiver. The transceiver 1930 may further include an antenna (antennas), and the number of antennas may be one or more.

In a possible implementation, the communication device 1900 may be the access network device of the embodiments of the present application, and the communication device 1900 may implement the corresponding procedures implemented by the access network device in various methods of the embodiments of the present application, which will not be repeated here for the sake of brevity.

In a possible implementation, the communication device 1900 may be the first core network device of the embodiments of the present application, and the communication device 1900 may implement the corresponding procedures implemented by the first core network device in various methods of the embodiments of the present application, which will not be repeated here for the sake of brevity.

FIG. 20 is a schematic structural diagram of a chip 2000 according to the embodiments of the present application. The chip 2000 includes a processor 2010, and the processor 2010 may call a computer program from a memory and run the computer program, to implement the methods in the embodiments of the present application.

In a possible implementation, the chip 2000 may further include a memory 2020. Herein, the processor 2010 may call a computer program from the memory 2020 and run the computer program, to implement the method performed by the access network device or the first core network device in the embodiments of the present application.

Herein, the memory 2020 may be a separate device independent of the processor 2010, or may be integrated into the processor 2010.

In a possible implementation, the chip 2000 may further include an input interface 2030. Herein, the processor 2010 may control the input interface 2030 to communicate with other devices or chips, and specifically, may control the input interface 2030 to acquire information or data transmitted by other devices or chips.

In a possible implementation, the chip 2000 may further include an output interface 2040. Herein, the processor 2010 may control the output interface 2040 to communicate with other devices or chips, and specifically, may control the output interface 2040 to output information or data to other devices or chips.

In a possible implementation, the chip may be applied to the access network device in the embodiments of the present application, and the chip may implement the corresponding procedures implemented by the access network device in various method of the embodiments of the present application, which will not be repeated here for the sake of brevity.

In a possible implementation, the chip may be applied to the first core network device in the embodiments of the present application, and the chip may implement the corresponding procedures implemented by the first core network device in various method of the embodiments of the present application, which will not be repeated here for the sake of brevity.

The chips applied to the access network device and the first core network device may be the same chip or different chips.

It should be understood that the chip mentioned in the embodiments of the present application may also be referred to as a system-level chip, a system chip, a chip system, a system-on-chip, or the like.

The processor mentioned above may be a general-purpose processor, a digital signal processor (DSP), a field programmable gate array (FPGA), an application specific integrated circuit (ASIC) or other programmable logic devices, transistor logic devices, discrete hardware components, etc. Herein, the general purpose processor mentioned above may be a microprocessor or any conventional processor, etc.

The memory mentioned above may be a volatile (transitory) memory or a non-volatile (non-transitory) memory, or may include both the volatile memory and non-volatile memory. Herein, the non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM).

It should be understood that the aforementioned memory is exemplary but not a limited illustration. For example, the memory in the embodiments of the present application may also be a static random access memory (static RAM, SRAM), a dynamic random access memory (dynamic RAM, DRAM), a synchronous dynamic random access memory (synchronous DRAM, SDRAM)), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct Rambus random access memory (Direct Rambus RAM, DR RAM), etc. That is, the memory in the embodiments of the present application is intended to include, but not limited to, these and any other suitable types of memories.

FIG. 21 is a schematic block diagram of a communication system 2100 according to the embodiments of the present application. The communication system 2100 includes an access network device 2110 and a first core network device 2120.

Herein, the access network device 2110 may be configured to implement the corresponding functions implemented by the access network device in the above methods, and the first core network device 2120 may be configured to implement the corresponding functions implemented by the first core network device in the above methods, which will not be repeated here for the sake of brevity.

The above embodiments, in whole or in part, may be implemented by software, hardware, firmware or any conjunction thereof. When implemented by using software, they, in whole or in part, may be implemented in the form of a computer program product. The computer program product includes one or more computer instructions. When the computer program instructions are loaded and performed on a computer, the procedures or functions according to the embodiments of the present application are generated in whole or in part. The computer may be a general purpose computer, a special purpose computer, a computer network, or other programmable apparatus. The computer instructions may be stored in a computer-readable storage medium, or transmitted from one computer-readable storage medium to another computer-readable storage medium. For example, the computer instructions may be transmitted from a website, a computer, a server, or a data center to another website, computer, server, or data center in a wired (e.g., coaxial cable, optical fiber, digital subscriber line (DSL)) or wireless (e.g., infrared, radio, microwave, or the like.) manner. The computer-readable storage medium may be any available medium that can be accessed by a computer, or a data storage device such as a server or a data center that includes one or more available media integrated therein. The available medium may be a magnetic medium (e.g., a floppy disk, a hard disk, a magnetic tape), an optical medium (e.g., a Digital Video Disk (DVD)), or a semiconductor medium (e.g., a solid state disk (SSD)), etc.

It should be understood that in the various embodiments of the present application, the sizes of the sequence numbers of the aforementioned processes do not mean the order of execution. The order of execution of the aforementioned various processes should be determined by their functions and internal logics, and shall not constitute any limitation on the implementation process of the embodiments of the present application.

Those skilled in the art may clearly understand that for the convenience and brevity of the description, the specific operating processes of the system, apparatus and unit described above may refer to the corresponding processes in the aforementioned method embodiments, which will not be repeated here.

The foregoing descriptions are merely specific implementations of the present application, but the protection scope of the present application is not limited thereto. Any skilled person in the art could readily conceive of changes or replacements within the technical scope disclosed in the present application, which shall be all included within the protection scope of the present application. Therefore, the protection scope of the present application shall be on the basis of the protection scope of claims.

## Claims

1. A communication method, comprising:
acquiring, by an access network device, data of each terminal device of one or more terminal devices, wherein the one or more terminal devices are associated with a target application function (AF); and
transmitting, by the access network device through a first data transmission channel, the data of each terminal device of the one or more terminal devices, wherein the first data transmission channel is related to the target AF.

2. The method according to claim 1, wherein the first data transmission channel is a data transmission channel between the access network device and a first core network device.

3. The method according to claim 2, wherein the method further comprises:
receiving, by the access network device, a first request message, wherein the first request message is used to request to establish the first data transmission channel; and
transmitting, by the access network device, a first response message, wherein the first response message is used to indicate that establishment of the first data transmission channel has been completed.

4. The method according to claim 3, wherein the first request message carries information related to the target AF and a parameter related to the first data transmission channel.

5. The method according to claim 2, wherein the method further comprises:
transmitting, by the access network device, a second request message, wherein the second request message is used to request to establish the first data transmission channel; and
receiving, by the access network device, a second response message, wherein the second response message carries a parameter related to the first data transmission channel.

6. The method according to claim 5, wherein the second request message carries information related to the target AF.

7. The method according to claim 4 or 6, wherein the information related to the target AF comprises at least one of: an identity of the target AF, or an identity of a service provider to which the target AF belongs.

8. The method according to any one of claims 4 to 7, wherein the parameter related to the first data transmission channel comprises at least one of: a first Internet Protocol (IP) address related to the target AF, an N2-application layer protocol (AP) identity related to the target AF, or a tunnel TE identity related to the target AF.

9. The method according to claim 8, wherein the first core network device is one of: an access and mobility management function (AMF), a core network device related to the target AF, a user plane function (UPF), and a session management function (SMF).

10. The method according to any one of claims 1 to 9, wherein the method further comprises:
receiving, by the access network device, first information, wherein the first information carries information related to a device of which data is allowed by the target AF to be acquired; and
determining, by the access network device, based on the first information, the one or more terminal devices, wherein each terminal device of the one or more terminal devices is the device of which data is allowed by the target AF to be acquired.

11. The method according to claim 10, wherein the information related to the device of which data is allowed by the target AF to be acquired, comprises at least one of: identity-related information of the device of which data is allowed by the target AF to be acquired, or parameter information of the device of which data is allowed by the target AF to be acquired.

12. The method according to claim 11, wherein the parameter information of the device of which data is allowed by the target AF to be acquired, comprises at least one of: a signal frequency of the device of which data is allowed by the target AF to be acquired, a signal waveform of the device of which data is allowed by the target AF to be acquired, a data acquiring time of the device of which data is allowed by the target AF to be acquired, or a location of the device of which data is allowed by the target AF to be acquired.

13. The method according to any one of claims 1 to 12, wherein the terminal device is a zero power consumption terminal.

14. A communication method, comprising:
receiving, by a first core network device through a first data transmission channel, data of each terminal device of one or more terminal devices; wherein the first data transmission channel is related to a target application function (AF), and the one or more terminal devices are associated with the target AF; and
transmitting, by the first core network device, the data of each terminal device of the one or more terminal devices.

15. The method according to claim 14, wherein the first data transmission channel is a data transmission channel between the first core network device and an access network device.

16. The method according to claim 15, wherein the method further comprises:
transmitting, by the first core network device, a first request message, wherein the first request message is used to request to establish the first data transmission channel; and
receiving, by the first core network device, a first response message, wherein the first response message is used to indicate that establishment of the first data transmission channel has been completed.

17. The method according to claim 16, wherein the first request message carries information related to the target AF and a parameter related to the first data transmission channel.

18. The method according to claim 17, wherein transmitting, by the first core network device, the first request message, comprises: transmitting, by the first core network device, the first request message to the access network device; and
receiving, by the first core network device, the first response message, comprises: receiving, by the first core network device, the first response message transmitted by the access network device.

19. The method according to claim 18, wherein before transmitting, by the first core network device, the first request message to the access network device, the method further comprises:
receiving, by the first core network device, a third request message transmitted by a second core network device, wherein the third request message is used to request to establish a second data transmission channel, wherein the second data transmission channel is a data transmission channel between the first core network device and the second core network device.

20. The method according to claim 19, wherein after receiving, by the first core network device, the first response message transmitted by the access network device, the method further comprises:
transmitting, by the first core network device, a third response message to the second core network device, wherein the third response message is used to indicate that establishment of the second data transmission channel has been completed.

21. The method according to claim 19, wherein the third request message carries at least one of: information related to the target AF, or a parameter related to the second data transmission channel.

22. The method according to claim 15, wherein the method further comprises:
receiving, by the first core network device, a second request message, wherein the second request message is used to request to establish the first data transmission channel; and
transmitting, by the first core network device, a second response message, wherein the second response message carries a parameter related to the first data transmission channel.

23. The method according to claim 22, wherein the second request message carries information related to the target AF.

24. The method according to claim 23, wherein receiving, by the first core network device, the second request message, comprises: receiving, by the first core network device, the second request message transmitted by the access network device; and
transmitting, by the first core network device, the second response message, comprises: transmitting, by the first core network device, the second response message to the access network device.

25. The method according to claim 24, wherein after receiving, by the first core network device, the second request message transmitted by the access network device, the method further comprises:
transmitting, by the first core network device, a fourth request message to a second core network device; wherein the fourth request message is used to request to establish a second data transmission channel, and the second data transmission channel is a data transmission channel between the first core network device and the second core network device.

26. The method according to claim 25, wherein before transmitting, by the first core network device, the second response message to the access network device, the method further comprises:
receiving, by the first core network device, a fourth response message transmitted by the second core network device, wherein the fourth response message carries a parameter related to the second data transmission channel.

27. The method according to claim 25, wherein the fourth request message carries the information related to the target AF.

28. The method according to claim 21 or 26, wherein the parameter related to the second data transmission channel comprises at least one of: a second IP address related to the target AF, or an identity of the second core network device.

29. The method according to any one of claims 19 to 21 and 25 to 28, wherein transmitting, by the first core network device, the data of each terminal device of the one or more terminal devices, comprises:
transmitting, by the first core network device through the second data transmission channel, the data of each terminal device of the one or more terminal devices to the second core network device; wherein the second core network device is used to forward the data of each terminal device to the target AF.

30. The method according to claim 23, wherein receiving, by the first core network device, the second request message, comprises: receiving, by the first core network device, the second request message transmitted by a second core network device; and
transmitting, by the first core network device, the second response message, comprises: transmitting, by the first core network device, the second response message to the second core network device.

31. The method according to claim 15, wherein the method further comprises:
receiving, by the first core network device, a fifth request message transmitted by a second core network device; wherein the fifth request message is used to request the first core network device to establish the first data transmission channel, and the fifth request message carries information related to the target AF; and
transmitting, by the first core network device, a fifth response message to the second core network device; wherein the fifth response message is used by the second core network device to transmit a sixth request message to the access network device, the sixth request message is used to request the access network device to establish the first data transmission channel, the fifth response message carries a parameter related to the first data transmission channel, and the sixth request message carries the information related to the target AF and the parameter related to the first data transmission channel.

32. The method according to any one of claims 17 to 31, wherein the parameter related to the first data transmission channel comprises at least one of: a first IP address related to the target AF, an N2-AP identity related to the target AF, or a TE identity related to the target AF.

33. The method according to any one of claims 17, 21, 23, 27, and 31, wherein the information related to the target AF comprises at least one of: an identity of the target AF, or an identity of a service provider to which the target AF belongs.

34. The method according to any one of claims 14 to 33, wherein the first core network device is one of: an AMF, a core network device related to the target AF, a UPF, and an SMF.

35. The method according to any one of claims 19 to 21 and 23 to 31, wherein the second core network device is one of: a session management function (SMF), and a network element function (NEF).

36. The method according to any one of claims 16 to 18, 22 to 24, 30 and 31, wherein transmitting, by the first core network device, the data of each terminal device of the one or more terminal devices, comprises:
transmitting, by the first core network device, the data of each terminal device of the one or more terminal devices to the target AF.

37. The method according to any one of claims 14 to 36, wherein the method further comprises:
receiving, by the first core network device, information related to a device of which data is allowed by the target AF to be acquired; and
transmitting, by the first core network device, first information, wherein the first information carries the information related to the device of which data is allowed by the target AF to be acquired.

38. The method according to claim 37, wherein receiving, by the first core network device, the information related to the device of which data is allowed by the target AF to be acquired, comprises one of:
receiving, by the first core network device, the information related to the device of which data is allowed by the target AF to be acquired, which is transmitted by the target AF; or
receiving, by the first core network device, the information related to the device of which data is allowed by the target AF to be acquired, which is transmitted by a second core network device.

39. The method according to claim 37 or 38, wherein the information related to the device of which data is allowed by the target AF to be acquired comprises at least one of: identity-related information of the device of which data is allowed by the target AF to be acquired; or parameter information of the device of which data is allowed by the target AF to be acquired.

40. The method according to claim 39, wherein the parameter information of the device of which data is allowed by the target AF to be acquired, comprises at least one of: a signal frequency of the device of which data is allowed by the target AF to be acquired; a signal waveform of the device of which data is allowed by the target AF to be acquired; a data acquiring time of the device of which data is allowed by the target AF to be acquired; or a location of the device of which data is allowed by the target AF to be acquired.

41. The method according to any one of claims 14 to 40, wherein the terminal device is a zero power consumption terminal.

42. An access network device, comprising:
a first communication unit, configured to acquire data of each terminal device of one or more terminal devices, wherein the one or more terminal devices are associated with a target application function (AF); and transmit the data of each terminal device of the one or more terminal devices through a first data transmission channel, wherein the first data transmission channel is related to the target AF.

43. The access network device according to claim 42, wherein the first data transmission channel is a data transmission channel between the access network device and a first core network device.

44. The access network device according to claim 43, wherein the first communication unit is configured to receive a first request message, wherein the first request message is used to request to establish the first data transmission channel; and transmit a first response message, wherein the first response message is used to indicate that establishment of the first data transmission channel has been completed.

45. The access network device according to claim 44, wherein the first request message carries information related to the target AF and a parameter related to the first data transmission channel.

46. The access network device according to claim 43, wherein the first communication unit is configured to transmit a second request message, wherein the second request message is used to request to establish the first data transmission channel; and receive a second response message, wherein the second response message carries a parameter related to the first data transmission channel.

47. The access network device according to claim 46, wherein the second request message carries information related to the target AF.

48. The access network device according to claim 45 or 47, wherein the information related to the target AF comprises at least one of: an identity of the target AF, or an identity of a service provider to which the target AF belongs.

49. An access network device according to any one of claims 45 to 48, wherein the parameter related to the first data transmission channel comprises at least one of: a first Internet Protocol (IP) address related to the target AF, an N2-application layer protocol (AP) identity related to the target AF, or a tunnel TE identity related to the target AF.

50. The access network device according to claim 49, wherein the first core network device is one of: an access and mobility management function (AMF), a core network device related to the target AF, a user plane function (UPF), and a session management function (SMF).

51. The access network device according to any one of claims 42 to 50, wherein the access network device further comprises:
a first processing unit, configured to determine the one or more terminal devices based on first information, wherein each terminal device of the one or more terminal devices is a device of which data is allowed by the target AF to be acquired;
wherein the first communication unit is configured to receive the first information, wherein the first information carries information related to the device of which data is allowed by the target AF to be acquired.

52. The access network device according to claim 51, wherein the information related to the device of which data is allowed by the target AF to be acquired, comprises at least one of: identity-related information of the device of which data is allowed by the target AF to be acquired, or parameter information of the device of which data is allowed by the target AF to be acquired.

53. The access network device according to claim 52, wherein the parameter information of the device of which data is allowed by the target AF to be acquired, comprises at least one of: a signal frequency of the device of which data is allowed by the target AF to be acquired, a signal waveform of the device of which data is allowed by the target AF to be acquired, a data acquiring time of the device of which data is allowed by the target AF to be acquired, or a location of the device of which data is allowed by the target AF to be acquired.

54. The access network device according to any one of claims 42 to 53, wherein the terminal device is a zero power consumption terminal.

55. A first core network device, comprising:
a second communication unit, configured to receive data of each terminal device of one or more terminal devices through a first data transmission channel, wherein the first data transmission channel is related to a target application function (AF), and the one or more terminal devices are associated with the target AF; and transmit the data of each terminal device of the one or more terminal devices.

56. The first core network device according to claim 55, wherein the first data transmission channel is a data transmission channel between the first core network device and an access network device.

57. The first core network device according to claim 56, wherein the second communication unit is configured to transmit a first request message, wherein the first request message is used to request to establish the first data transmission channel; and receive a first response message, wherein the first response message is used to indicate that establishment of the first data transmission channel has been completed.

58. The first core network device according to claim 57, wherein the first request message carries information related to the target AF and a parameter related to the first data transmission channel.

59. The first core network device according to claim 58, wherein the second communication unit is configured to transmit the first request message to the access network device; and receive the first response message transmitted by the access network device.

60. The first core network device according to claim 59, wherein the second communication unit is configured to receive a third request message transmitted by a second core network device, before transmitting the first request message to the access network device, wherein the third request message is used to request to establish a second data transmission channel, wherein the second data transmission channel is a data transmission channel between the first core network device and the second core network device.

61. The first core network device according to claim 60, wherein the second communication unit is configured to transmit a third response message to the second core network device, after receiving the first response message transmitted by the access network device, wherein the third response message is used to indicate that establishment of the second data transmission channel has been completed.

62. The first core network device according to claim 60, wherein the third request message carries at least one of: information related to the target AF, or a parameter related to the second data transmission channel.

63. The first core network device according to claim 56, wherein the second communication unit is configured to receive a second request message, wherein the second request message is used to request to establish the first data transmission channel; and transmit a second response message, wherein the second response message carries a parameter related to the first data transmission channel.

64. The first core network device according to claim 63, wherein the second request message carries information related to the target AF.

65. The first core network device according to claim 64, wherein the second communication unit is configured to receive the second request message transmitted by the access network device; and transmit the second response message to the access network device.

66. The first core network device according to claim 65, wherein the second communication unit is configured to transmit a fourth request message to a second core network device, after receiving the second request message transmitted by the access network device, wherein the fourth request message is used to request to establish a second data transmission channel, and the second data transmission channel is a data transmission channel between the first core network device and the second core network device.

67. The first core network device according to claim 66, wherein the second communication unit is configured to receive a fourth response message transmitted by the second core network device, before transmitting the second response message to the access network device, wherein the fourth response message carries a parameter related to the second data transmission channel.

68. The first core network device according to claim 66, wherein the fourth request message carries the information related to the target AF.

69. The first core network device according to claim 62 or 67, wherein the parameter related to the second data transmission channel comprises at least one of: a second IP address related to the target AF, or an identity of the second core network device.

70. The first core network device according to any one of claims 60 to 62 and 66 to 68, wherein the second communication unit is configured to transmit the data of each terminal device of the one or more terminal devices to the second core network device through the second data transmission channel; wherein the second core network device is used to forward the data of each terminal device to the target AF.

71. The first core network device according to claim 64, wherein the second communication unit is configured to receive the second request message transmitted by a second core network device; and transmit the second response message to the second core network device.

72. The first core network device according to claim 56, wherein the second communication unit is configured to: receive a fifth request message transmitted by a second core network device, wherein the fifth request message is used to request the first core network device to establish the first data transmission channel, and the fifth request message carries information related to the target AF; and
transmit a fifth response message to the second core network device; wherein the fifth response message is used by the second core network device to transmit a sixth request message to the access network device, the sixth request message is used to request the access network device to establish the first data transmission channel, the fifth response message carries a parameter related to the first data transmission channel, and the sixth request message carries the information related to the target AF and the parameter related to the first data transmission channel.

73. The first core network device according to any one of claims 58 to 72, wherein the parameter related to the first data transmission channel comprises at least one of: a first IP address related to the target AF, an N2-AP identity related to the target AF, or a TE identity related to the target AF.

74. The first core network device according to any one of claims 58, 62, 64, 68, and 72, wherein the information related to the target AF comprises at least one of: an identity of the target AF, or an identity of a service provider to which the target AF belongs.

75. The first core network device according to any one of claims 55 to 74, wherein the first core network device is one of: an access and mobility management function (AMF), a core network device related to the target AF, a user plane function (UPF), and a session management function (SMF).

76. The first core network device according to any one of claims 60 to 62 and 66 to 72, wherein the second core network device is one of: an SMF, and a network element function (NEF).

77. The first core network device according to any one of claims 57 to 59, 63 to 65 and 71 to 73, wherein the second communication unit is configured to transmit the data of each terminal device of the one or more terminal devices to the target AF.

78. The first core network device according to any one of claims 55 to 77, wherein the second communication unit is configured to receive information related to a device of which data is allowed by the target AF to be acquired; and transmit first information, wherein the first information carries the information related to the device of which data is allowed by the target AF to be acquired.

79. The first core network device according to claim 78, wherein the second communication unit is configured to perform one of:
receiving the information related to the device of which data is allowed by the target AF to be acquired, which is transmitted by the target AF; or
receiving the information related to the device of which data is allowed by the target AF to be acquired, which is transmitted by a second core network device.

80. The first core network device according to claim 78 or 79, wherein the information related to the device of which data is allowed by the target AF to be acquired comprises at least one of: identity-related information of the device of which data is allowed by the target AF to be acquired; or parameter information of the device of which data is allowed by the target AF to be acquired.

81. The first core network device according to claim 80, wherein the parameter information of the device of which data is allowed by the target AF to be acquired, comprises at least one of: a signal frequency of the device of which data is allowed by the target AF to be acquired; a signal waveform of the device of which data is allowed by the target AF to be acquired; a data acquiring time of the device of which data is allowed by the target AF to be acquired; or a location of the device of which data is allowed by the target AF to be acquired.

82. The first core network device according to any one of claims 55 to 81, wherein the terminal device is a zero power consumption terminal.

83. An access network device, comprising: a processor and a memory, wherein the memory is configured to store a computer program, the processor is configured to call and run the computer program stored in the memory, to cause the access network device to perform the method according to any one of claims 1 to 13.

84. A first core network device, comprising: a processor and a memory, wherein the memory is configured to store a computer program, the processor is configured to call and run the computer program stored in the memory, to cause the first core network device to perform the method according to any one of claims 14 to 41.

85. A chip, comprising: a processor, configured to call a computer program from a memory and run the computer program, to cause a device equipped with the chip to perform the method according to any one of claims 1 to 13.

86. A chip, comprising: a processor, configured to call a computer program from a memory and run the computer program, to cause a device equipped with the chip to perform the method according to any one of claims 14 to 41.

87. A computer-readable storage medium, configured to store a computer program, wherein the computer program, when performed on a device, causes the device to perform the method according to any one of claims 1 to 13, or the method according to any one of claims 14 to 41.

88. A computer program product, comprising computer program instructions, wherein the computer program instructions cause a computer to perform the method according to any one of claims 1 to 13, or the method according to any one of claims 14 to 41.

89. A computer program, wherein the computer program causes a computer to perform the method according to any one of claims 1 to 13, or the method according to any one of claims 14 to 41.
